# EUROPEAN PATENT APPLICATION

(11) **EP 2 988 549 A1**
(43) Date of publication of application: **24.02.2016**
(21) Application number: 13882196.2
(22) Date of filing: 16.04.2013
(51) Int. Cl.: H04W 36/00

(54) **COMMUNICATIONS MODE SWITCHING METHOD, APPARATUS AND SYSTEM**

(71) Applicant: Fujitsu Limited, Kawasaki-shi, Kanagawa 211-8588 (JP)
(72) Inventor: QIU, Tao, Beijing 100025 (CN); WU, Lianhai, Beijing 100025 (CN); CHANG, Ningjuan, Beijing 100025 (CN)
(74) Representative: Ward, James Norman
(86) International application number: PCT/CN2013/074267
(87) International publication number: WO 2014/169438

(57) **Abstract**

Embodiments of the present disclosure provide a method and apparatus of communication mode switch and a system. The method includes: determining a mode switch manner by an eNB according to a predetermined policy; transmitting a first mode switch command by the eNB to UE in D2D communication if the mode switch manner is no packet data convergence protocol (PDCP) parameter exchange, and resetting all PDCP transmitter parameters and PDCP receiver parameters by the eNB to be 0; and transmitting a mode switch preparation command by the eNB to UE in D2D communication if the mode switch manner is full PDCP parameter exchange, so that the UE reports PDCP transmitter parameters, PDCP receiver parameters and a PDCP status report or reports a first missing PDCP reception SN and a corresponding HFN, thereby completing PDCP parameter setting and mode switch. With the method, apparatus and system of the embodiments of the present disclosure, different solutions are provided for different communication mode switch scenarios, thereby completely solving a problem of service continuity in mode switch.

## Description

### Technical Field

The present disclosure relates to the field of communications, and in particular to a method and apparatus of communication mode switch and a system.

### Background

D2D (device to device) communication refers to direct communication between UEs (user equipments), which is a new communication mode introduced on a basis of original cellular communication. Due to a characteristic of dynamic change of a wireless channel, UE often needs to be switched between different communication modes (a D2D mode or a cellular mode). For example, for UEs performing D2D communication, if quality of a D2D link between UEs is poor to some extent, the UEs needs to be switched to the cellular mode, so as to ensure continuity of traffic transmission.

Currently, a scheme for communication mode switch is that UE transmits parameters related to PDCP (packet data convergence protocol) to an eNB to achieve continuity of traffic transmission of the UE when switching communication mode. However, following problems exist in such a scheme:
1. the UE feeds back only part of the PDCP parameters, for example, an HFN (hyper frame number) of a PDCP packet is not included, hence, a problem of continuity of traffics cannot be solved completely; and
2. only part of scenarios are studied in this scheme, such as mode switch under control of the same eNB, and scenarios under control of different eNBs are not studied.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary

An object of embodiments of the present disclosure is to provide a method and apparatus of communication mode switch and a system, so as to solve the problem of ensuring continuity of traffics in communication mode switch of UE.

According to a first aspect of the embodiments of the present disclosure, there is provided a method of communication mode switch, applicable to an eNB, the method including:
determining a mode switch manner by the eNB according to a predetermined policy; and
transmitting a first mode switch command by the eNB to UE in D2D communication if the mode switch manner is no PDCP parameter exchange, and resetting all PDCP transmitter parameters and PDCP receiver parameters by the eNB to be 0.

According to a second aspect of the embodiments of the present disclosure, there is provided a method of communication mode switch, applicable to UE in a D2D communication process, the method including:
resetting all PDCP transmitter parameters and PDCP receiver parameters to be 0 by the UE if the UE receives a first mode switch command transmitted by an eNB, and transmitting data by the UE on the link after the communication mode switch is completed.

According to a third aspect of the embodiments of the present disclosure, there is provided a method of communication mode switch, applicable to an eNB, the method including:
determining a mode switch manner by the eNB according to a predetermined policy;
transmitting a mode switch preparation command by the eNB to UE in D2D communication if the mode switch manner is full PDCP parameter exchange;
if PDCP transmitter parameters, PDCP receiver parameters and PDCP status report that are reported by an UE are received, taking the PDCP transmitter parameters by the eNB as transmitter parameters of downlink between the eNB and paired UE in D2D communication of the UE, taking the PDCP receiver parameters by the eNB as receiver parameters of uplink between the eNB and the paired UE in D2D communication of the UE, and transmitting the PDCP status report by the eNB to the paired UE in D2D communication of the UE; and
transmitting a second mode switch command by the eNB to the UE.

According to a fourth aspect of the embodiments of the present disclosure, there is provided a method of communication mode switch, applicable to UE in a D2D communication process, the method including:
if the UE receives a mode switch preparation command transmitted by an eNB, reporting PDCP transmitter parameters, PDCP receiver parameters and a PDCP status report by the UE to the eNB, so that the eNB takes the PDCP transmitter parameters as transmitter parameters of downlink between the eNB and paired UE in D2D communication of the UE, takes the PDCP receiver parameters as receiver parameters of uplink between the eNB and the paired UE in D2D communication of the UE, and transmits the PDCP status report to the paired UE in D2D communication of the UE.

According to a fifth aspect of the embodiments of the present disclosure, there is provided a method of communication mode switch, applicable to an eNB, the method including:
determining a mode switch manner by the eNB according to a predetermined policy;
transmitting a mode switch preparation command by the eNB to UE in D2D communication if the mode switch manner is partial PDCP parameter exchange;
if a first missing PDCP reception serial number (SN) and a corresponding hyper frame number (HFN) reported by the UE are received, resetting PDCP transmitter parameters and PDCP receiver parameters of a link between the eNB and paired UE in D2D communication of the UE by the eNB according to the first missing PDCP reception SN and the corresponding HFN, and transmitting the first missing PDCP reception SN and the corresponding HFN by the eNB to the paired UE in D2D communication of the UE; and
transmitting a second mode switch command by the eNB to the UE.

According to a sixth aspect of the embodiments of the present disclosure, there is provided a method of communication mode switch, applicable to UE in a D2D communication process, the method including:
if the UE receives a mode switch preparation command transmitted by an eNB, reporting a first missing PDCP reception SN and a corresponding HFN by the UE to the eNB, so that the eNB resets PDCP transmitter parameters and PDCP receiver parameters of a link between the eNB and paired UE in D2D communication of the UE according to the first missing PDCP reception SN and the corresponding HFN, and transmits the first missing PDCP reception SN and the corresponding HFN to the paired UE in D2D communication of the UE.

According to a seventh aspect of the embodiments of the present disclosure, there is provided a method of communication mode switch, applicable to an eNB, the method including:
determining a mode switch manner by the eNB according to a predetermined policy;
transmitting a mode switch preparation command by the eNB to its serving UE in D2D communication if the mode switch manner is full PDCP parameter exchange; and
if PDCP transmitter parameters, PDCP receiver parameters and a PDCP status report that are reported by the UE are received, forwarding the PDCP transmitter parameters, the PDCP receiver parameters and the PDCP status report by the eNB to a serving eNB of paired UE in D2D communication of the UE.

According to an eighth aspect of the embodiments of the present disclosure, there is provided a method of communication mode switch, applicable to UE in a D2D communication process, the method including:
if the UE receives a mode switch preparation command transmitted by its serving eNB, reporting PDCP transmitter parameters, PDCP receiver parameters and a PDCP status report by the UE to the serving eNB, so that the serving eNB forwards the PDCP transmitter parameters, the PDCP receiver parameters and the PDCP status report to a serving eNB of paired UE in D2D communication of the UE.

According to a ninth aspect of the embodiments of the present disclosure, there is provided a method of communication mode switch, applicable to an eNB, the method including:
determining a mode switch manner by the eNB according to a predetermined policy;
transmitting a mode switch preparation command by the eNB to UE in D2D communication if the mode switch manner is partial PDCP parameter exchange; and
if a first missing PDCP reception SN and a corresponding HFN reported by the UE are received, forwarding the first missing PDCP reception SN and the corresponding HFN of the UE by the eNB to a serving eNB of paired UE in D2D communication of the UE.

According to a tenth aspect of the embodiments of the present disclosure, there is provided a method of communication mode switch, applicable to UE in D2D communication, the method including:
if the UE receives a mode switch preparation command transmitted by an eNB, reporting a first missing PDCP reception SN and a corresponding HFN by the UE to the eNB, so that the eNB forwards the first missing PDCP reception SN and the corresponding HFN to a serving eNB of paired UE in D2D communication of the UE.

According to an eleventh aspect of the embodiments of the present disclosure, there is provided a method of communication mode switch, applicable to an eNB, the method including:
determining a mode switch manner by the eNB according to a predetermined policy;
transmitting a mode switch preparation command by the eNB to UE in D2D communication if the mode switch manner is full PDCP parameter exchange or partial PDCP parameter exchange, so that the UE maintains its cellular connection;
transmitting data by the eNB to the UE on previous link before the communication mode switch is completed, until all core network packets related to the D2D communication are transmitted, or transmitting data by the eNB to the UE, until all the core network packets related to the D2D communication and packets forwarded by other eNBs are transmitted;
transmitting a second mode switch command by the eNB to the UE, so that the UE transmits a next PDCP reception SN and a corresponding HFN to its paired UE; and
transmitting a PDCP status report or a first missing PDCP reception SN and a corresponding HFN by the eNB to the UE, so that the UE retransmits a PDCP packet according to the PDCP status report or the first missing PDCP reception SN and the corresponding HFN.

According to a twelfth aspect of the embodiments of the present disclosure, there is provided a method of communication mode switch, applicable to UE, the method including:
if the UE receives a mode switch preparation command transmitted by an eNB, maintaining cellular connection by the UE, so as to receive data transmitted by the eNB; and
if the UE receives a second mode switch command, transmitting a next PDCP reception SN and a corresponding HFN by the UE to its paired UE.

According to a thirteenth aspect of the embodiments of the present disclosure, there is provided an eNB, including:
a determining unit configured to determine a mode switch manner according to a predetermined policy; and
a processing unit configured to transmit a first mode switch command to UE in D2D communication if the mode switch manner determined by the determining unit is no PDCP parameters exchange, and reset all PDCP transmitter parameters and PDCP receiver parameters to be 0.

According to a fourteenth aspect of the embodiments of the present disclosure, there is provided UE, including:
a processing unit configured to reset all PDCP transmitter parameters and PDCP receiver parameters to be 0 if the UE receives a first mode switch command transmitted by an eNB, and transmit data on the link after the communication mode switch is completed.

According to a fifteenth aspect of the embodiments of the present disclosure, there is provided an eNB, including:
a determining unit configured to determine a mode switch manner according to a predetermined policy;
a first transmitting unit configured to transmit a mode switch preparation command to UE in D2D communication if the mode switch manner determined by the determining unit is full PDCP parameter exchange;
a processing unit configured to, if the eNB receives PDCP transmitter parameters, PDCP receiver parameters and a PDCP status report that are reported by the UE, take the PDCP transmitter parameters as transmitter parameters of downlink between the eNB and paired UE in D2D communication of the UE, take the PDCP receiver parameters as receiver parameters of uplink between the eNB and the paired UE in D2D communication of the UE, and transmit the PDCP status report to the paired UE in D2D communication of the UE; and
a second transmitting unit configured to transmit a second mode switch command to the UE.

According to a sixteenth aspect of the embodiments of the present disclosure, there is provided UE, including:
a first transmitting unit configured to, if the UE receives a mode switch preparation command transmitted by an eNB, report PDCP transmitter parameters, PDCP receiver parameters and a PDCP status report to the eNB, so that the eNB takes the PDCP transmitter parameters as transmitter parameters of downlink between the eNB and paired UE in D2D communication of the UE, takes the PDCP receiver parameters as receiver parameters of uplink between the eNB and the paired UE in D2D communication of the UE, and transmits the PDCP status report to the paired UE in D2D communication of the UE.

According to a seventeenth aspect of the embodiments of the present disclosure, there is provided an eNB, including:
a determining unit configured to determine a mode switch manner according to a predetermined policy;
a first transmitting unit configured to transmit a mode switch preparation command to UE in D2D communication if the mode switch manner determined by the determining unit is partial PDCP parameter exchange;
a processing unit configured to, if the eNB receives a first missing PDCP reception SN and a corresponding HFN reported by the UE, reset PDCP transmitter parameters and PDCP receiver parameters of a link between the eNB and paired UE in D2D communication of the UE according to the first missing PDCP reception SN and the corresponding HFN, and transmit the first missing PDCP reception SN and the corresponding HFN to the paired UE in D2D communication of the UE; and
a second transmitting unit configured to transmit a second mode switch command to the UE.

According to an eighteenth aspect of the embodiments of the present disclosure, there is provided UE, including:
a first transmitting unit configured to, if the UE receives a mode switch preparation command transmitted by an eNB, report a first missing PDCP reception SN and a corresponding HFN to the eNB, so that the eNB resets PDCP transmitter parameters and PDCP receiver parameters of a link between the eNB and paired UE in D2D communication of the UE according to the first missing PDCP reception SN and the corresponding HFN, and transmits the first missing PDCP reception SN and the corresponding HFN to the paired UE in D2D communication of the UE.

According to a nineteenth aspect of the embodiments of the present disclosure, there is provided an eNB, including:
a determining unit configured to determine a mode switch manner according to a predetermined policy;
a first transmitting unit configured to transmit a mode switch preparation command to UE in D2D communication if the mode switch manner determined by the determining unit is full PDCP parameter exchange; and
a first processing unit configured to, if the eNB receives PDCP transmitter parameters, PDCP receiver parameters and a PDCP status report that are reported by the UE, forward the PDCP transmitter parameters, the PDCP receiver parameters and the PDCP status report to a serving eNB of paired UE in D2D communication of the UE.

According to a twentieth aspect of the embodiments of the present disclosure, there is provided UE, including:
a first transmitting unit configured to, if the UE receives a mode switch preparation command transmitted by an eNB, report PDCP transmitter parameters, PDCP receiver parameters and a PDCP status report to its serving eNB, so that the serving eNB forwards the PDCP transmitter parameters, the PDCP receiver parameters and the PDCP status report to a serving eNB of paired UE in D2D communication of the UE.

According to a twenty-first aspect of the embodiments of the present disclosure, there is provided an eNB, including:
a determining unit configured to determine a mode switch manner according to a predetermined policy;
a first transmitting unit configured to transmit a mode switch preparation command to UE in D2D communication if the mode switch manner determined by the determining unit is partial PDCP parameter exchange; and
a first processing unit configured to, if the eNB receives a first missing PDCP reception SN and a corresponding HFN reported by the UE, forward the first missing PDCP reception SN and the corresponding HFN of the UE to a serving eNB of paired UE in D2D communication of the UE.

According to a twenty-second aspect of the embodiments of the present disclosure, there is provided UE, including:
a first transmitting unit configured to, if the UE receives a mode switch preparation command transmitted by its serving eNB, report a first missing PDCP reception SN and a corresponding HFN to the serving eNB, so that the serving eNB forwards the first missing PDCP reception SN and the corresponding HFN to a serving eNB of paired UE in D2D communication of the UE.

According to a twenty-third aspect of the embodiments of the present disclosure, there is provided an eNB, including:
a determining unit configured to determine a mode switch manner according to a predetermined policy;
a first transmitting unit configured to transmit a mode switch preparation command to UE in D2D communication if the mode switch manner determined by the determining unit is full PDCP parameter exchange or partial PDCP parameter exchange, so that the UE maintains its cellular connection;
a first data transmitting unit configured to transmit data to the UE on previous link before the mode switch is completed, until all core network packets related to the D2D communication are transmitted, or transmit data to the UE on the previous link, until all the core network packets related to the D2D communication and packets forwarded by other eNBs are transmitted;
a second transmitting unit configured to transmit a second mode switch command to the UE, so that the UE transmits a next PDCP reception SN and a corresponding HFN to its paired UE; and
a third transmitting unit configured to transmit a PDCP status report or a first missing PDCP reception SN and a corresponding HFN to the UE, so that the UE retransmits a PDCP packet according to the PDCP status report or the first missing PDCP reception SN and the corresponding HFN.

According to a twenty-fourth aspect of the embodiments of the present disclosure, there is provided UE, including:
a receiving unit configured to, if the UE receives a mode switch preparation command transmitted by its serving eNB, maintain cellular connection, so as to receive data transmitted by the serving eNB; and
a transmitting unit configured to, if the UE receives a second mode switch command, transmit a next PDCP reception SN and a corresponding HFN to the paired UE in D2D communication of the UE.

According to a twenty-fifth aspect of the embodiments of the present disclosure, there is provided a communication system, including the eNB as described in the thirteenth aspect and at least two UEs as described in the fourteenth aspect; or including the eNB as described in the fifteenth aspect and at least two UEs as described in the sixteenth aspect; or including the eNB as described in the seventeenth aspect and at least two UEs as described in the eighteenth aspect; or including the eNB as described in the nineteenth aspect and at least two UEs as described in the twentieth aspect; or including the eNB as described in the twenty-first aspect and at least two UEs as described in the twenty-second aspect; or including the eNB as described in the twenty-third aspect and at least two UEs as described in the twenty-fourth aspect.

According to another aspect of the embodiments of the present disclosure, there is provided a computer-readable program, wherein when the program is executed in terminal equipment, the program enables a computer to carry out the method of communication mode switch as described in any one of the second, fourth, sixth, eighth, tenth and twelfth aspects in the terminal equipment.

According to a further aspect of the embodiments of the present disclosure, there is provided a storage medium in which a computer-readable program is stored, wherein the computer-readable program enables a computer to carry out the method of communication mode switch as described in any one of the second, fourth, sixth, eighth, tenth and twelfth aspects in terminal equipment.

According to still another aspect of the embodiments of the present disclosure, there is provided a computer-readable program, wherein when the program is executed in an eNB, the program enables a computer to carry out the method of communication mode switch as described in any one of the first, third, fifth, seventh, ninth and eleventh aspects in the eNB.

According to yet another aspect of the embodiments of the present disclosure, there is provided a storage medium in which a computer-readable program is stored, wherein the computer-readable program enables a computer to carry out the method of communication mode switch as described in any one of the first, third, fifth, seventh, ninth and eleventh aspects in an eNB.

An advantage of the embodiments of the present disclosure exists in that with the method and apparatus of communication mode switch and system of the embodiments of the present disclosure, different solutions are provided for different scenarios of communication mode switch, thereby completely solving a problem of service continuity in mode switch.

With reference to the following description and drawings, the particular embodiments of the present disclosure are disclosed in detail, and the principles of the present disclosure and the manners of use are indicated. It should be understood that the scope of the embodiments of the present disclosure is not limited thereto. The embodiments of the present disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated or reduced in size. Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment. In the drawings:
Figure 1 is a schematic diagram of network topology of a cellular communication mode;
Figure 2 is a schematic diagram of network topology of another cellular communication mode;
Figure 3 is a schematic diagram of network topology of a D2D communication mode;
Figure 4 is a schematic diagram of network topology of another D2D communication mode;
Figure 5 is a flowchart of a method of communication mode switch of embodiments 1, 4, 7 and 10 of the present disclosure;
Figure 6 is a schematic diagram of information exchange of the method of Embodiment 1;
Figure 7 is a flowchart of a method of communication mode switch of Embodiment 2 of the present disclosure;
Figure 8 is a schematic diagram of information exchange of the method shown in Fig. 7;
Figure 9 is a flowchart of a method of communication mode switch of Embodiment 3 of the present disclosure;
Figure 10 is a schematic diagram of information exchange of the method shown in Fig. 9;
Figure 11 is a schematic diagram of information exchange of the method of Embodiment 4;
Figure 12 is a flowchart of a method of communication mode switch of Embodiment 5 of the present disclosure;
Figure 13 is a schematic diagram of information exchange of the method shown in Fig. 12;
Figure 14 is a flowchart of a method of communication mode switch of Embodiment 6 of the present disclosure;
Figure 15 is a schematic diagram of information exchange of the method shown in Fig. 14;
Figure 16 is a schematic diagram of information exchange of the method of Embodiment 7;
Figure 17 is a flowchart of a method of communication mode switch of Embodiment 8 of the present disclosure;
Figure 18 is a schematic diagram of information exchange of the method shown in Fig. 17;
Figure 19 is a flowchart of a method of communication mode switch of Embodiment 9 of the present disclosure;
Figure 20 is a schematic diagram of information exchange of the method shown in Fig. 19;
Figure 21 is a schematic diagram of information exchange of the method of Embodiment 10;
Figure 22 is a schematic diagram of information exchange of the method of Embodiment 11;
Figure 23 is a schematic diagram of information exchange of the method of Embodiment 12;
Figure 24 is a flowchart of a method of communication mode switch of Embodiment 13 of the present disclosure;
Figure 25 is a flowchart of a method of communication mode switch of Embodiment 14 of the present disclosure;
Figure 26 is a flowchart of a method of communication mode switch of Embodiment 15 of the present disclosure;
Figure 27 is a flowchart of a method of communication mode switch of Embodiment 16 of the present disclosure;
Figure 28 is a schematic diagram of a structure of an eNB of Embodiment 17 of the present disclosure;
Figure 29 is a schematic diagram of a structure of an eNB of Embodiment 18 of the present disclosure;
Figure 30 is a schematic diagram of a structure of an eNB of Embodiment 19 of the present disclosure;
Figure 31 is a schematic diagram of a structure of an eNB of Embodiment 20 of the present disclosure;
Figure 32 is a schematic diagram of a structure of an eNB of Embodiment 21 of the present disclosure;
Figure 33 is a schematic diagram of a structure of an eNB of Embodiment 22 of the present disclosure;
Figure 34 is a schematic diagram of a structure of UE of Embodiment 23 of the present disclosure;
Figure 35 is a schematic diagram of a structure of UE of Embodiment 24 of the present disclosure;
Figure 36 is a schematic diagram of a structure of UE of Embodiment 25 of the present disclosure; and
Figure 37 is a schematic diagram of a structure of UE of Embodiment 26 of the present disclosure.

### Detailed Description

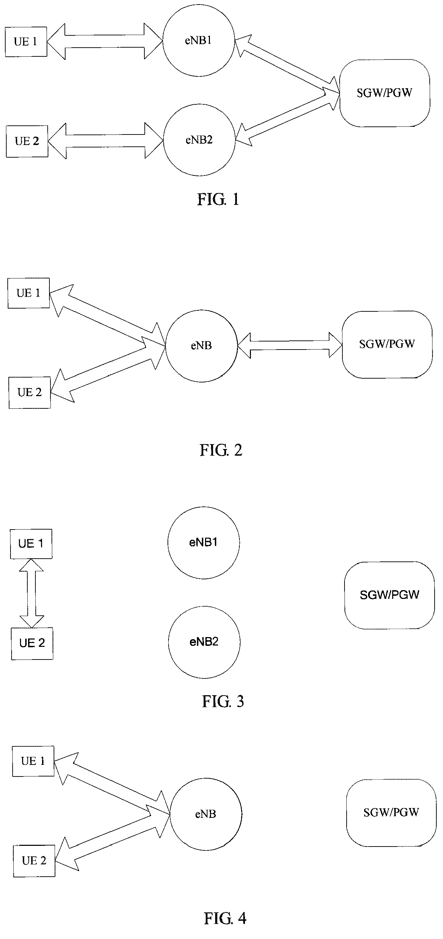

The foregoing and other features of the embodiments of the present disclosure shall become apparent with reference to the drawings and the following description. These embodiments are illustrative only, and are not intended to limit the present disclosure. For the principles and modes of implementation of the present disclosure to be easily understood by those skilled in the art, the implementations of the present disclosure shall be described taking the cellular communication modes shown in Figs. 1 and 2 and the D2D communication modes shown in Figs. 3 and 4 as examples, so as to describe the methods of communication mode switch of the embodiments of the present disclosure. However, it should be understood that the embodiments of the present disclosure are not limited to the above communication modes, and are applicable to other scenarios related to communication mode switch.

In the embodiments of the present disclosure, continuity of traffics in communication mode switch is achieved by exchanging PDCP parameters between an eNB and UE, between UE and UE, and/or between an eNB and an eNB. PDCP parameters in an existing protocol mainly include: PDCP transmitter parameters, PDCP receiver parameters and a PDCP status report, wherein, the PDCP transmitter parameters include a transmission serial number (SN) of a next PDCP packet and a corresponding hyper frame number (HFN); the PDCP receiver parameters include a reception SN of a next PDCP packet, a corresponding HFN and a last submitted PDCP reception SN; and the PDCP status report includes a first missing PDCP reception SN, a corresponding HFN and a bitmap reflecting a reception status, wherein the bitmap may start from a next SN of the first missing PDCP reception SN, and its length is variable, such as 0.

In the embodiments of the present disclosure, three manners of mode switch are proposed according to whether PDCP parameters need to be exchanged between nodes in the mode switch, that is, full PDCP parameter exchange, partial PDCP parameter exchange, and no PDCP parameter exchange, wherein, in the manner of mode switch of the full PDCP parameter exchange, PDCP parameters needing to be exchanged include PDCP transmitter parameters, PDCP receiver parameters and a PDCP status report; in the manner of mode switch of the partial PDCP parameter exchange, PDCP parameters needing to be exchanged include a part of a PDCP status report, such as a first missing PDCP reception SN and a corresponding HFN, in the manner of mode switch of the no PDCP parameter exchange, PDCP parameters of all nodes are reset to be 0.

The methods, apparatuses and system of the embodiments of the present disclosure shall be described below in detail with respect to different communication mode switch scenarios.

Embodiments 1-3 below are applicable to a scenario of switching from the D2D communication mode shown in Fig. 3 to the cellular communication mode shown in Fig. 2, and are also applicable to a scenario of switching from the D2D communication mode shown in Fig. 3 to the D2D communication mode shown in Fig. 4. In these embodiments, Embodiment 1 is a case of no PDCP parameter exchange, Embodiment 2 is a case of full PDCP parameter exchange, and Embodiment 3 is a case of partial PDCP parameter exchange.

### Embodiment 1

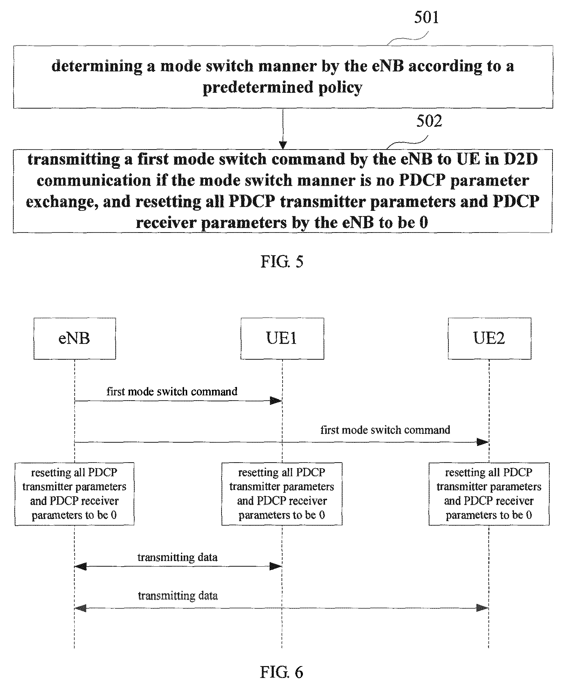

An embodiment of the present disclosure provides a method of communication mode switch, applicable to an eNB. Fig. 5 is a flowchart of the method. Referring to Fig. 5, the method includes:
step 501: determining a mode switch manner by the eNB according to a predetermined policy;
   in this embodiment, the eNB may determine which of the above-described manners of mode switch is used according to different requirements of traffics; for example, the manner of mode switch of the no PDCP parameter exchange may be used for traffics having a relatively high requirement on real time and permitting part of data to be lost (such as session traffics, etc.), and the manner of mode switch of the partial PDCP parameter exchange or the full PDCP parameter exchange may be used for non-real-time traffics permitting no data loss (such as exchange traffics, etc.); the manner of mode switch determined by the eNB may be agreed between it and UE in advance, and may also be configured via signaling (such as RRC layer signaling); however, this embodiment of the present disclosure is not limited thereto;
step 502: transmitting a first mode switch command by the eNB to UE in D2D communication if the mode switch manner is no PDCP parameter exchange, and resetting all PDCP transmitter parameters and PDCP receiver parameters by the eNB to be 0;
   wherein, as an eNB serves for two UEs in the cellular communication mode, the eNB will transmit the first mode switch command to both the UEs in the D2D communication mode; that is, the UEs in D2D communication are, for example, UE1 and UE2 in the D2D communication mode shown in Fig. 3;
   in this embodiment, when the eNB determines to use the manner of mode switch of the no PDCP parameter exchange, it may transmit the mode switch command (referred to as a first mode switch command in this embodiment of the present disclosure, for the convenience of explanation) to the UE in D2D communication, and reset all the PDCP transmitter parameters and PDCP receiver parameters to be 0. Correspondingly, the UE receiving the first mode switch command resets its PDCP transmitter parameters and PDCP receiver parameters to be 0. Thus, the UE may complete the switch from the D2D communication mode to the cellular communication mode, and transmit data on the link after the switch is completed.

Fig. 6 is a schematic diagram of information exchange between the eNB and the UEs of this embodiment. As shown in Fig. 6, when the eNB determines to use the manner of mode switch of the no PDCP parameter exchange, the eNB transmits the first mode switch command respectively to UE1 and UE2, and sets the PDCP transmitter parameters and PDCP receiver parameters of its own to be 0. After receiving the first mode switch command, UE1 and UE2 also reset respective PDCP transmitter parameters and PDCP receiver parameters to be 0. Thus, UE1 and UE2 may complete the switch from the D2D communication mode to the cellular communication mode, and transmit data on the link after the switch is completed.

With the method of this embodiment, in determining to use the manner of mode switch of the no PDCP parameter exchange, the eNB may transmit the first mode switch command to the UEs in D2D communication, so that the UEs reset its PDCP transmitter parameters and PDCP receiver parameters to be 0, thereby completing the switch of the communication mode.

### Embodiment 2

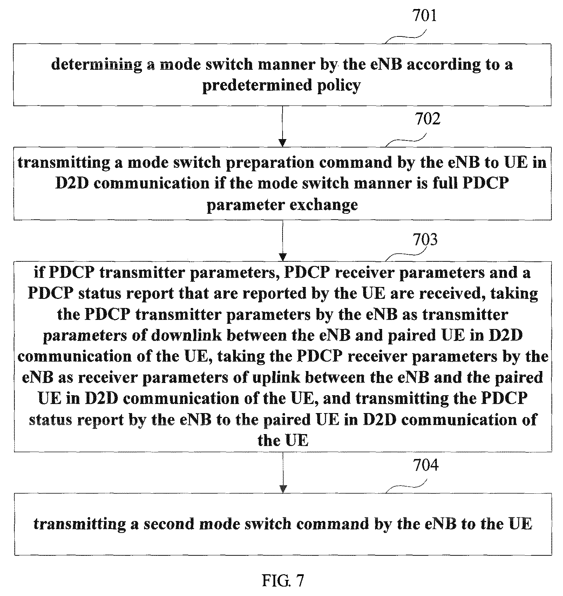

An embodiment of the present disclosure further provides a method of communication mode switch, applicable to an eNB. Fig. 7 is a flowchart of the method. Referring to Fig. 7, the method includes:
step 701: determining a mode switch manner by the eNB according to a predetermined policy;
   wherein, a manner of processing of step 701 is identical to that of step 501 of Embodiment 1, the contents of which being incorporated herein, which shall not be described herein any further;
step 702: transmitting a mode switch preparation command by the eNB to UE in D2D communication if the mode switch manner is full PDCP parameter exchange;
   wherein, when it is determined in step 701 that the mode switch manner is the full PDCP parameter exchange, the eNB may transmit the mode switch preparation command to the UEs in D2D communication, so that the UEs in D2D communication prepare for switch of the communication mode;
   wherein, similar to Embodiment 1, the UEs in D2D communication are both parties in a D2D communication process, such as UE1 and UE2 shown in Fig. 2;
step 703: if PDCP transmitter parameters, PDCP receiver parameters and a PDCP status report that are reported by the UE are received, taking the PDCP transmitter parameters by the eNB as transmitter parameters of downlink between the eNB and paired UE in D2D communication of the UE, taking the PDCP receiver parameters by the eNB as receiver parameters of uplink between the eNB and the paired UE in D2D communication of the UE, and transmitting the PDCP status report by the eNB to the paired UE in D2D communication of the UE;
   wherein, as the manner of mode switch is the full PDCP parameter exchange, the UE receiving the mode switch preparation command will report its PDCP transmitter parameters, PDCP receiver parameters and PDCP status report to its serving eNB;
   in this embodiment, the eNB receiving the information will set parameters according to the received information, such as taking the received PDCP transmitter parameters of the UE as the transmitter parameters of the downlink between the eNB and the paired UE of the UE, and taking the received PDCP receiver parameters of the UE as the receiver parameters of the uplink between the eNB and the paired UE of the UE;
   in this embodiment, the eNB receiving the information may also transmit the received PDCP status report of the UE to the paired UE, so that the paired UE retransmits unsuccessfully received PDCP packets accordingly;
step 704: transmitting a second mode switch command by the eNB to the UE;
   wherein, after performing the processing as in step 703 according to the above received information, the eNB further transmits a mode switch command (referred to as a second mode switch command in this embodiment of the present disclosure, for the convenience of explanation) to the UE, and after receiving the second mode switch command, the UE may complete the switch from the D2D communication mode to the cellular communication mode, and further transmits data on the link after the switch is completed; for example, as described above, unsuccessfully received PDCP packets are retransmitted on the link after the communication mode switch is completed.

In this embodiment, an order of executing steps 704 and 703 is not limited, and in a particular implementation, these two steps may be executed in a combined manner. After receiving the PDCP status report of the paired UE (transmitted in step 703) and the second mode switch command (transmitted in step 704), the UE may retransmit the unsuccessfully received PDCP packets on the link after the communication mode switch is completed according to the PDCP status report of the paired UE.

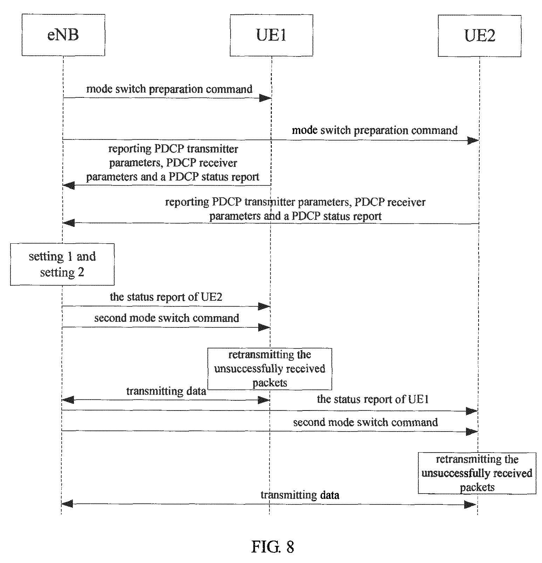

Fig. 8 is a schematic diagram of information exchange between the eNB and the UEs of this embodiment. As shown in Fig. 8, when the eNB determines to use the manner of mode switch of the full PDCP parameter exchange, the eNB transmits the mode switch preparation command respectively to UE1 and UE2. As the manner of the full PDCP parameter exchange is used, after receiving the mode switch preparation command, UE1 and UE2 will report respective PDCP transmitter parameters, PDCP receiver parameters and PDCP status report to the eNB. After receiving the above information transmitted by UE1, the eNB will take the PDCP transmitter parameters of UE1 as receiver parameters of downlink between the eNB and UE2 (setting 1), take the PDCP receiver parameters of UE1 as transmitter parameters of uplink between the eNB and UE2 (setting 2), and at the same time, transmit the PDCP status report of UE1 and the second mode switch command to UE2, so that UE2 retransmits the unsuccessfully received PDCP packets on the link after the communication mode switch is completed accordingly. Likewise, after receiving the above information transmitted by UE2, the eNB will take the PDCP transmitter parameters of UE2 as transmitter parameters of downlink between the eNB and UE1, take the PDCP receiver parameters of UE2 as receiver parameters of uplink between the eNB and UE1, and at the same time, transmit the PDCP status report of UE2 and the second mode switch command to UE1, so that UE1 retransmits the unsuccessfully received PDCP packets on the link after the communication mode switch is completed accordingly.

With the method of this embodiment, switch of the UE from the D2D communication mode to the cellular communication mode may be achieved, and all the PDCP parameters may be exchanged as demanded by the traffics, thereby ensuring continuity of the traffics.

### Embodiment 3

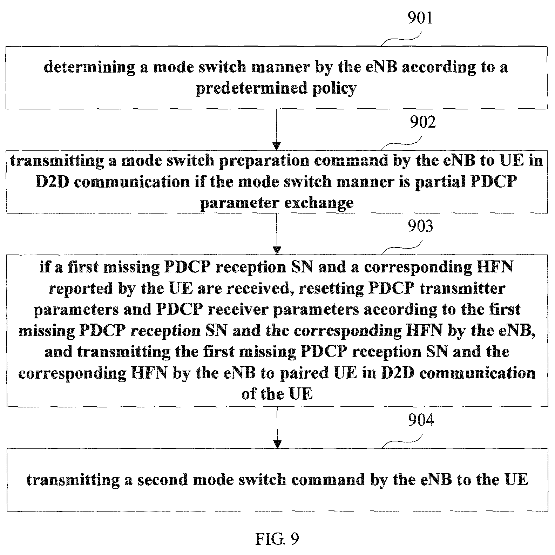

An embodiment of the present disclosure further provides a method of communication mode switch, applicable to an eNB. Fig. 9 is a flowchart of the method. Referring to Fig. 9, the method includes:
step 901: determining a mode switch manner by the eNB according to a predetermined policy;
   wherein, a manner of processing of step 901 is identical to that of step 501 of Embodiment 1, the contents of which being incorporated herein, which shall not be described herein any further;
step 902: transmitting a mode switch preparation command by the eNB to UE in D2D communication if the mode switch manner is partial PDCP parameter exchange;
   wherein, when it is determined in step 901 that the mode switch manner is the partial PDCP parameter exchange, the eNB may transmit the mode switch preparation command to the UEs in D2D communication, so that the UEs in D2D communication prepare for switch of the communication mode;
   wherein, similar to Embodiment 1, the UEs in D2D communication are both parties in a D2D communication process, such as UE1 and UE2 shown in Fig. 2;
step 903: if a first missing PDCP reception SN and a corresponding HFN reported by the UE are received, resetting PDCP transmitter parameters and PDCP receiver parameters according to the first missing PDCP reception SN and the corresponding HFN by the eNB, and transmitting the first missing PDCP reception SN and the corresponding HFN by the eNB to paired UE in D2D communication of the UE;
   wherein, as the manner of mode switch is the partial PDCP parameter exchange, the UE receiving the mode switch preparation command will report its first missing PDCP reception SN and the corresponding HFN to its serving eNB;
   in this embodiment, the eNB receiving the information will reset its PDCP transmitter parameters and PDCP receiver parameters according to the received first missing PDCP reception SN and the corresponding HFN of the UE, such as taking the received PDCP transmitter parameters of the UE as the PDCP transmitter parameters of the downlink between the eNB and the paired UE of the UE, and transmitting the received first missing PDCP reception SN and the corresponding HFN of the UE to the paired UE, so that the paired UE retransmits PDCP packets accordingly, such as retransmitting all transmitted PDCP packets starting from the first missing PDCP reception SN and the corresponding HFN;
step 904: transmitting a second mode switch command by the eNB to the UE;
   wherein, after performing the processing as in step 903 according to the above received information, the eNB further transmits the second mode switch command to the UE, and after receiving the second mode switch command, the UE may complete the switch from the D2D communication mode to the cellular communication mode, and further transmit data on the link after the switch is completed; for example, as described above, transmit all the transmitted PDCP packets starting from the first missing PDCP reception SN and the corresponding HFN on the link after the communication mode switch is completed.

In this embodiment, an order of executing steps 904 and 903 is not limited, and in a particular implementation, these two steps may be executed in a combined manner. After receiving the first missing PDCP reception SN and the corresponding HFN of the paired UE (transmitted in step 903) and the second mode switch command (transmitted in step 904), the UE may retransmit all the transmitted PDCP packets on the link after the communication mode switch is completed starting from the first missing PDCP reception SN of the paired UE.

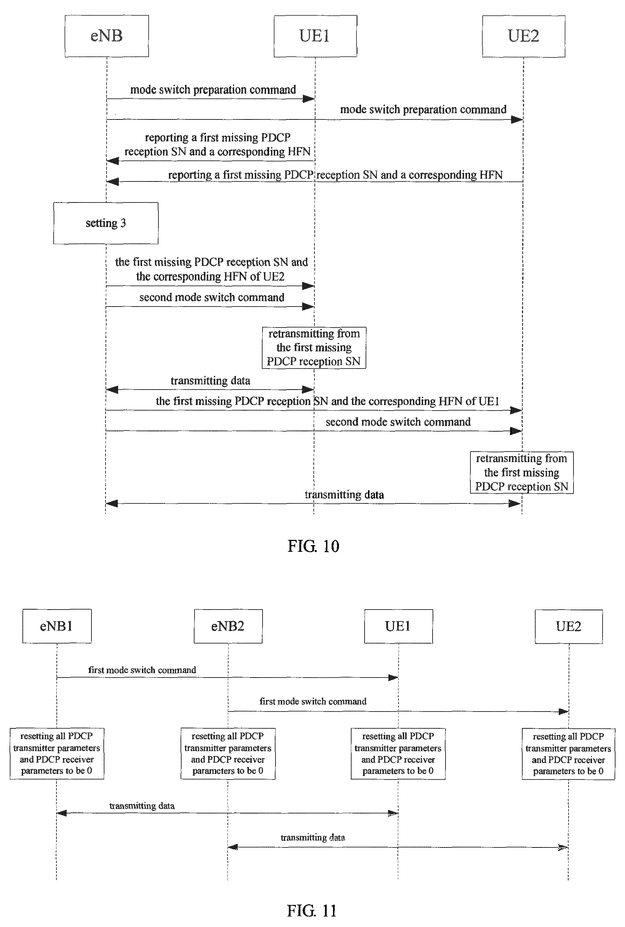

Fig. 10 is a schematic diagram of information exchange between the eNB and the UEs of this embodiment. As shown in Fig. 10, when the eNB determines to use the manner of mode switch of the partial PDCP parameter exchange, the eNB transmits the mode switch preparation command respectively to UE1 and UE2. As the manner of the partial PDCP parameter exchange is used, after receiving the mode switch preparation command, UE1 and UE2 will report respective first missing PDCP reception SN and the corresponding HFN to the eNB. After receiving the above information transmitted by UE1, the eNB will reset the PDCP transmitter parameters and PDCP receiver parameters of a cellular link between the eNB and UE2 according to the information of UE1 (setting 3), and transmit the first missing PDCP reception SN and the corresponding HFN of UE1 to UE2, so that UE2 retransmits corresponding PDCP packets accordingly after receiving the second mode switch command transmitted by the eNB. Likewise, after receiving the above information transmitted by UE2, the eNB will reset the PDCP transmitter parameters and PDCP receiver parameters of a cellular link between the eNB and UE1 according to the first missing PDCP reception SN and the corresponding HFN of UE2 (setting 3), and transmit the first missing PDCP reception SN and the corresponding HFN of UE2 to UE1, so that UE1 retransmits corresponding PDCP packets accordingly after receiving the second mode switch command. Furthermore, the eNB will transmit the second mode switch command to UE1 and UE2, and UE1 and UE2 may complete switch from the D2D communication mode to the cellular communication mode according to the second mode switch command, and transmit data on the link after the communication mode switch is completed, such as retransmitting all the transmitted PDCP packets from the first missing PDCP reception SN.

With the method of this embodiment, switch of the UE from the D2D communication mode to the cellular communication mode may be achieved, and part of the PDCP parameters are only exchanged as demanded by the traffics, thereby ensuring continuity of the traffics.

Embodiments 4-6 below are applicable to a scenario of switch from the D2D communication mode shown in Fig. 3 to the cellular communication mode shown in Fig. 1. In these embodiments, Embodiment 4 is a case of no PDCP parameter exchange, Embodiment 5 is a case of full PDCP parameter exchange, and Embodiment 6 is a case of partial PDCP parameter exchange.

### Embodiment 4

An embodiment of the present disclosure provides a method of communication mode switch, applicable to an eNB. This method may be carried out by the method shown in Fig. 5. Referring still to Fig. 5, the method includes:
step 501: determining a mode switch manner by the eNB according to a predetermined policy;
step 502: transmitting a first mode switch command by the eNB to UE in D2D communication if the mode switch manner is no PDCP parameter exchange, and resetting all PDCP transmitter parameters and PDCP receiver parameters to be 0.

Different from Embodiment 1, in this embodiment, the UEs in D2D communication are served by different eNBs. Hence, in this embodiment, the different eNBs transmit the above first mode switch command to the UEs served by them according to the method shown in Fig. 5, and reset all the PDCP transmitter parameters and PDCP receiver parameters to be 0. Likewise, the UE receiving the first mode switch command will reset its PDCP transmitter parameters and PDCP receiver parameters to be 0, thereby completing switch of the communication mode, and transmits data on the link after the switch is completed.

Fig. 11 is a schematic diagram of information exchange between the eNBs and the UEs of this embodiment. As shown in Fig. 11, when the eNBs determine to use the manner of mode switch of the no PDCP parameter exchange, eNB1 transmits the first mode switch command to UE1, and eNB2 transmits the first mode switch command to UE2. At the same time, eNB 1 and eNB2 will reset their respective PDCP transmitter parameters and PDCP receiver parameters to be 0. After receiving the first mode switch command transmitted by respective eNBs, UE1 and UE2 will also reset their respective PDCP transmitter parameters and PDCP receiver parameters to be 0. In this way, UE1 and UE2 complete switch from the D2D communication mode to the cellular communication mode, and transmit data on the link after the switch is completed.

With the method of this embodiment, switch of the UE from the D2D communication mode to the cellular communication mode may be achieved, and the PDCP parameters need not be exchanged as demanded by the traffics, thereby ensuring continuity of the traffics.

### Embodiment 5

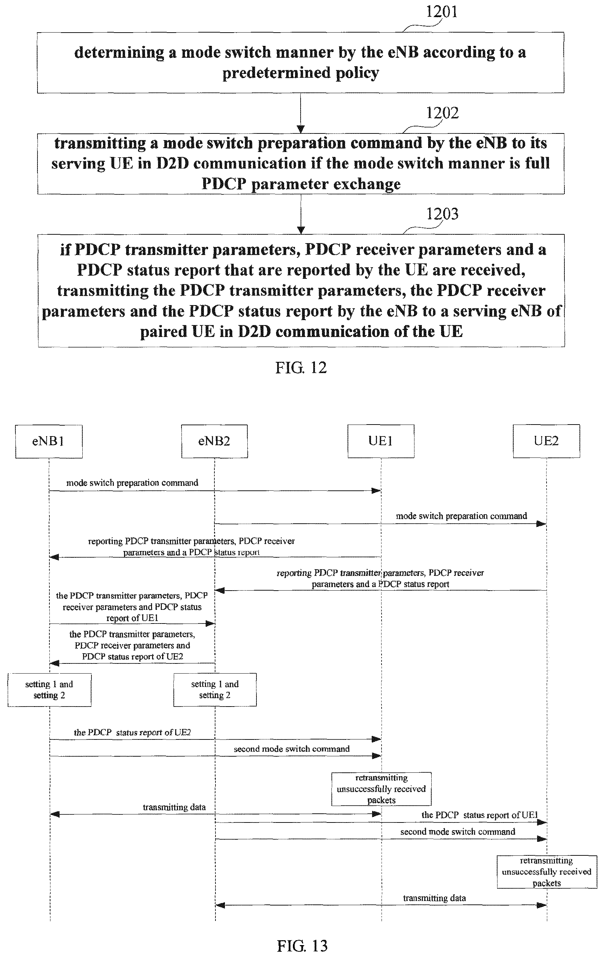

An embodiment of the present disclosure provides a method of communication mode switch, applicable to an eNB. Fig. 12 is a flowchart of the method. Referring to Fig. 12, the method includes:
step 1201: determining a mode switch manner by the eNB according to a predetermined policy;
   wherein, a manner of processing of step 1201 is identical to that of step 501 of Embodiment 1, the contents of which being incorporated herein, which shall not be described herein any further;
step 1202: transmitting a mode switch preparation command by the eNB to its serving UE in D2D communication if the mode switch manner is full PDCP parameter exchange;
   wherein, when it is determined in step 1201 that the mode switch manner is the full PDCP parameter exchange, the eNB may transmit the mode switch preparation command to the UE in D2D communication, so that the UE in D2D communication prepares for switch of the communication mode;
   wherein, as two UEs are served respectively by two eNBs in a cellular communication mode, each eNB will transmit the mode switch preparation command to the UE for which it serves; that is, the UE in D2D communication may be UE in a D2D communication process, and the eNB serves for the UE;
step 1203: if PDCP transmitter parameters, PDCP receiver parameters and a PDCP status report that are reported by the UE are received, transmitting the PDCP transmitter parameters, the PDCP receiver parameters and the PDCP status report by the eNB to a serving eNB of paired UE in D2D communication of the UE;
   wherein, similar to Embodiment 2, as the manner of mode switch is the full PDCP parameter exchange, the UE receiving the mode switch preparation command will report its PDCP transmitter parameters, PDCP receiver parameters and PDCP status report to its serving eNB; in this embodiment, the eNB receiving the information will forward the information to the serving eNB of the paired UE in D2D communication of the UE, so that the serving eNB of the paired UE sets transmitter parameters of downlink between it and the paired UE and receiver parameters of uplink between it and the paired UE accordingly.
   In this embodiment, if the eNB receives PDCP transmitter parameters, PDCP receiver parameters and a PDCP status report of the paired UE transmitted by the serving eNB of the paired UE, the eNB may take the PDCP transmitter parameters of the paired UE as transmitter parameters of downlink between the eNB and the UE, take the PDCP receiver parameters of the paired UE as receiver parameters of uplink between the eNB and the UE, and transmit the PDCP status report of the paired UE and a second mode switch command to the UE, so that the UE retransmit unsuccessfully received PDCP data accordingly on the link after the switch is completed.

In this embodiment, similar to Embodiment 2, an order of the step of transmitting the second mode switch command by the eNB to the UE for which it serves and the step of transmitting the PDCP status report of the paired UE by the eNB to the UE for which it serves is also not limited, and these two steps may be executed in a combined manner.

Fig. 13 is a schematic diagram of information exchange between the eNBs and the UEs of this embodiment. As shown in Fig. 13, when the eNBs determine to use the manner of mode switch of the full PDCP parameter exchange, eNB 1 transmits the mode switch preparation command to UE1, and eNB2 transmits the mode switch preparation command to UE2. As the manner of full PDCP parameter exchange is used, after receiving the mode switch preparation commands transmitted by respective eNBs, UE1 and UE2 will also report their respective PDCP transmitter parameters, PDCP receiver parameters and PDCP status reports to their respective serving eNBs.

As shown in Fig. 13, UE1 reports the PDCP transmitter parameters, PDCP receiver parameters and PDCP status report of UE1 to eNB1, and UE2 reports the PDCP transmitter parameters, PDCP receiver parameters and PDCP status report of UE2 to eNB2.

After receiving the above information transmitted by UE1, eNB1 will forward the PDCP transmitter parameters, PDCP receiver parameters and PDCP status report of UE1 to the serving eNB of UE2, i.e. eNB2. And after receiving the PDCP transmitter parameters, PDCP receiver parameters and PDCP status report of UE1 transmitted by eNB1, eNB2 may set transmitter parameters of downlink between it and UE2 and receiver parameters of uplink between it and UE2 accordingly, such as taking the PDCP transmitter parameters of UE1 as the transmitter parameters of the downlink between it and UE2, taking the PDCP receiver parameters of UE1 as the receiver parameters of the uplink between it and UE2, and transmitting the PDCP status report of UE1 to UE2, and at the same time, transmitting the second mode switch command to UE2, so that UE2 retransmits unsuccessfully received PDCP packets accordingly, such as retransmitting the unsuccessfully received PDCP packets on the link after the switch is completed.

Likewise, after receiving the above information transmitted by UE2, eNB2 will also perform the same processing as eNB1, such as forwarding the PDCP transmitter parameters, PDCP receiver parameters and PDCP status report of UE2 to the serving eNB of UE1, i.e. eNB1. And after receiving the PDCP transmitter parameters, PDCP receiver parameters and PDCP status report of UE2 transmitted by eNB2, eNB1 may set transmitter parameters of downlink between it and UE1 and receiver parameters of uplink between it and UE1 accordingly, such as taking the PDCP transmitter parameters of UE2 as the transmitter parameters of the downlink between it and UE1, taking the PDCP receiver parameters of UE2 as the receiver parameters of the uplink between it and UE1, and at the same time, transmitting the PDCP status report of UE2 and the second mode switch command to UE1, so that UE1 retransmits unsuccessfully received PDCP packets accordingly, such as retransmitting the unsuccessfully received PDCP packets on the link after the switch is completed.

With the method of this embodiment, switch of the UE from the D2D communication mode to the cellular communication mode may be achieved, and all the PDCP parameters may be exchanged as demanded by the traffics, thereby ensuring continuity of the traffics.

### Embodiment 6

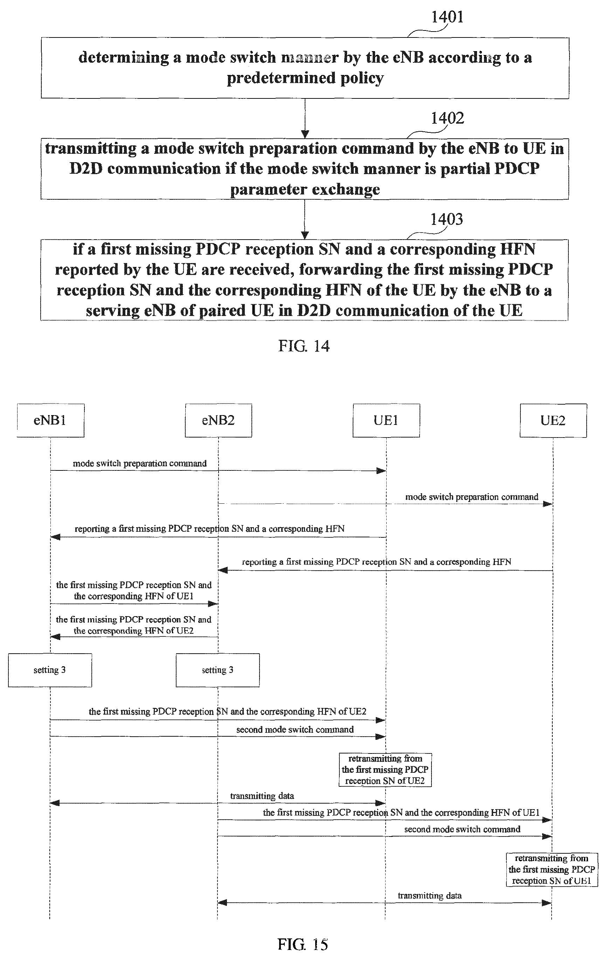

An embodiment of the present disclosure provides a method of communication mode switch, applicable to an eNB. Fig. 14 is a flowchart of the method. Referring to Fig. 14, the method includes:
step 1401: determining a mode switch manner by the eNB according to a predetermined policy;
   wherein, a manner of processing of step 1401 is identical to that of step 501 of Embodiment 1, the contents of which being incorporated herein, which shall not be described herein any further;
step 1402: transmitting a mode switch preparation command by the eNB to UE in D2D communication if the mode switch manner is partial PDCP parameter exchange;
   wherein, when it is determined in step 1401 that the mode switch manner is the partial PDCP parameter exchange, the eNB may transmit the mode switch preparation command to the UE in D2D communication, so that the UE in D2D communication prepares for switch of the communication mode;
   wherein, as two UEs are served respectively by two eNBs in a cellular communication mode, each eNB will transmit the mode switch preparation command to the UE for which it serves; that is, the UE in D2D communication may be UE in a D2D communication process, and the eNB serves for the UE;
step 1403: if a first missing PDCP reception SN and a corresponding HFN reported by the UE are received, forwarding the first missing PDCP reception SN and the corresponding HFN of the UE by the eNB to a serving eNB of paired UE in D2D communication of the UE;
   wherein, similar to Embodiment 3, as the manner of mode switch is the partial PDCP parameter exchange, the UE receiving the mode switch preparation command will report its first missing PDCP reception SN and the corresponding HFN to its serving eNB; in this embodiment, the eNB receiving the information will forward the information to the serving eNB of the paired UE in D2D communication of the UE, so that the serving eNB of the paired UE resets PDCP transmitter and receiver parameters accordingly.

In this embodiment, if the eNB receives the first missing PDCP reception SN and the corresponding HFN of the paired UE transmitted by the serving eNB of the paired UE, the eNB resets PDCP transmitter parameters and PDCP receiver parameters according to the first missing PDCP reception SN and the corresponding HFN of the paired UE, and transmits the first missing PDCP reception SN and the corresponding HFN of the paired UE to the UE, so that the UE retransmits corresponding data accordingly, such as retransmitting all transmitted PDCP packets starting from the first missing PDCP reception SN. Furthermore, the eNB transmits a second mode switch command to the UE, so that the UE completes the switch of the communication mode, and transmits data on the link after the switch is completed, such as retransmitting the corresponding data on the link after the switch is completed.

In this embodiment, similar to Embodiment 3, an order of the step of transmitting the second mode switch command by the eNB to the UE for which it serves and the step of transmitting the PDCP status report of the paired UE by the eNB to the UE for which it serves is also not limited, and these two steps may be executed in a combined manner.

Fig. 15 is a schematic diagram of information exchange between the eNBs and the UEs of this embodiment. As shown in Fig. 15, when the eNBs determine to use the manner of mode switch of the partial PDCP parameter exchange, eNB1 transmits the mode switch preparation command to UE1, and eNB2 transmits the mode switch preparation command to UE2. As the manner of partial PDCP parameter exchange is used, after receiving the mode switch preparation commands transmitted by respective eNBs, UE1 and UE2 will also report their respective first missing PDCP reception SNs and the corresponding HFNs to their respective serving eNBs.

As shown in Fig. 15, UE1 reports its first missing PDCP reception SN and the corresponding HFN to eNB1, and UE2 reports its first missing PDCP reception SN and the corresponding HFN to eNB2.

After receiving the above information transmitted by UE1, eNB1 will reset its PDCP transmitter parameters (setting 3), and transmit the first missing PDCP reception SN and the corresponding HFN of UE1 to a serving eNB of UE2, that is eNB2. After receiving the first missing PDCP reception SN and the corresponding HFN of UE1 transmitted by eNB1, eNB2 may reset its PDCP receiver parameters (setting 3), transmit the first missing PDCP reception SN and the corresponding HFN of UE1 to UE2, and transmit the second mode switch command to UE2 at the same time, such that UE2 may retransmit corresponding data on the link after the mode switch is completed accordingly, such as retransmitting all the transmitted PDCP packets from the first missing PDCP reception SN.

Likewise, after receiving the above information transmitted by UE2, eNB2 will also perform the same processing as eNB1, such as resetting its PDCP transmitter parameters (setting 3), forwarding the first missing PDCP reception SN and the corresponding HFN of UE2 to a serving eNB of UE1, that is eNB1. And after receiving the first missing PDCP reception SN and the corresponding HFN of UE2 transmitted by eNB2, eNB1 will reset its PDCP receiver parameters accordingly (setting 3), and transmit the PDCP status report of UE2 and the second mode switch command to UE1, so that UE1 retransmits corresponding data on the link after the mode switch is complete accordingly, such as retransmitting all the transmitted data from the first missing PDCP reception SN.

With the method of this embodiment, switch of the UE from the D2D communication mode to the cellular communication mode may be achieved, and all the PDCP parameters may be exchanged as demanded by the traffics, thereby ensuring continuity of the traffics.

Embodiments 7-9 below are applicable to a scenario of switch from the cellular communication mode shown in Fig. 2 to the D2D communication mode shown in Fig. 3, and are also applicable to a scenario of switch from the D2D communication mode shown in Fig. 4 to the D2D communication mode shown in Fig. 3. In these embodiments, Embodiment 7 is a case of no PDCP parameter exchange, Embodiment 8 is a case of full PDCP parameter exchange, and Embodiment 9 is a case of partial PDCP parameter exchange.

### Embodiment 7

An embodiment of the present disclosure provides a method of communication mode switch, applicable to an eNB. This method may be carried out by the method shown in Fig. 5. Referring still to Fig. 5, the method includes:
step 501: determining a mode switch manner by the eNB according to a predetermined policy;
step 502: transmitting a first mode switch command by the eNB to UE in D2D communication if the mode switch manner is no PDCP parameter exchange, and resetting all PDCP transmitter parameters and PDCP receiver parameters to be 0.

Different from Embodiments 1 and 3, the method of this embodiment is applicable to the switch from the cellular communication mode to the D2D communication mode. Hence, after the eNB transmits the first mode switch command to the UE by using the method shown in Fig. 5, the UE transmits data in the switched D2D link after the UE resets all its PDCP transmitter parameters and PDCP receiver parameters to be 0.

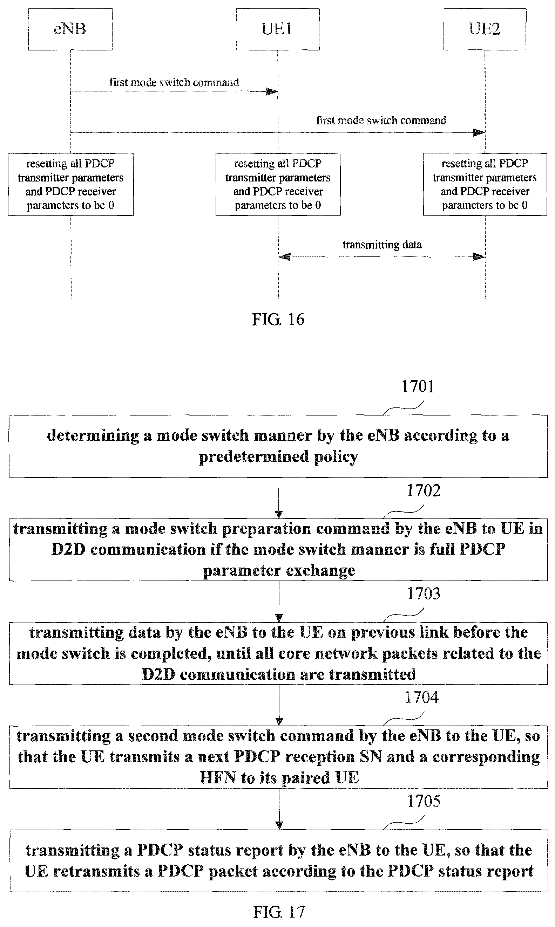

Fig. 16 is a schematic diagram of information exchange between the eNB and the UEs of this embodiment. As shown in Fig. 16, when the eNB determines to use the manner of mode switch of the no PDCP parameter exchange, the eNB transmits the first mode switch command respectively to UE1 and UE2, and resets its PDCP transmitter parameters and PDCP receiver parameters to be 0. After receiving the first mode switch command transmitted by the eNB, UE1 and UE2 will also reset their respective PDCP transmitter parameters and PDCP receiver parameters to be 0. In this way, UE1 and UE2 complete switch from the cellular communication mode to the D2D communication mode, and mutually transmit data in a switched D2D link.

With the method of this embodiment, switch from the cellular communication mode to the D2D communication mode may be achieved, and continuity of the traffics may be ensured.

### Embodiment 8

An embodiment of the present disclosure provides a method of communication mode switch, applicable to an eNB. Fig. 17 is a flowchart of the method. Referring to Fig. 17, the method includes:
step 1701: determining a mode switch manner by the eNB according to a predetermined policy;
   wherein, a manner of processing of step 1701 is identical to that of step 501 of Embodiment 1, the contents of which being incorporated herein, which shall not be described herein any further;
step 1702: transmitting a mode switch preparation command by the eNB to UE in D2D communication if the mode switch manner is full PDCP parameter exchange, so that the UE maintains its cellular connection;
   wherein, when it is determined by the eNB that the mode switch manner is the full PDCP parameter exchange, the eNB will transmit the mode switch preparation command to the UE for which it serves, so that the UE prepares for switch of the communication mode; and wherein, after receiving the mode switch preparation command transmitted by the eNB, the UE will maintain its original cellular connection, so as to receive all data on the cellular link;
step 1703: transmitting data by the eNB to the UE on previous link before the mode switch is completed, until all core network packets related to the D2D communication are transmitted;
   wherein, in order to ensure continuity of the traffics, the eNB will transmit all the core network packets related to the D2D communication before the switch of the communication mode, a transmission process and manner being identical to those in the prior art, and being not going to be described herein any further;
step 1704: transmitting a second mode switch command by the eNB to the UE, so that the UE transmits a next PDCP reception SN and a corresponding HFN to its paired UE;
   wherein, after the above data transmission is completed, the eNB may transmit the second mode switch command to the UE for which it serves, indicating the UE to perform mode switch; and the UE receiving the second mode switch command will transmit its next PDCP reception SN and the corresponding HFN to its paired UE, so that the paired UE sets its PDCP transmitter parameters accordingly; wherein, the UE may transmit the above information via previous link before the mode switch is completed, and may also transmit the above information via the link after the mode switch is completed, depending on a connection status of the link;
step 1705: transmitting a PDCP status report by the eNB to the UE, so that the UE retransmits a PDCP packet according to the PDCP status report;
   wherein, in order to ensure continuity of traffics, the eNB needs further to transmit the PDCP status report to the UE for which it serves, so that the UE retransmits unsuccessfully received PDCP packets on the link after the mode switch is completed accordingly.

In this embodiment, similar to embodiments 2 and 3, an order of the step of transmitting the second mode switch command by the eNB to the UE for which it serves and the step of transmitting the PDCP status report by the eNB to the UE for which it serves is also not limited, and these two steps may be executed in a combined manner.

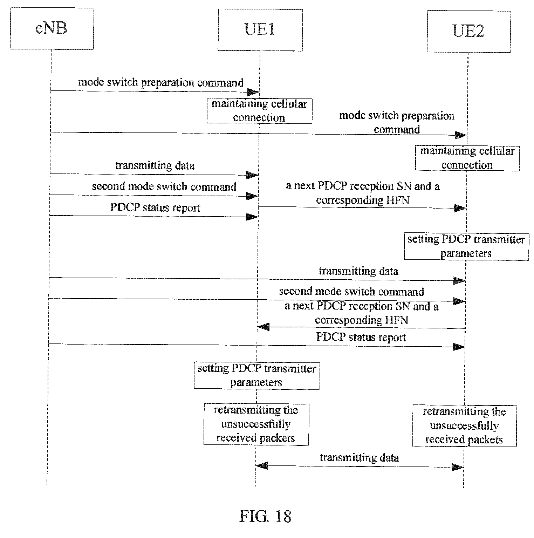

Fig. 18 is a schematic diagram of information exchange between the eNB and the UEs of this embodiment. As shown in Fig. 18, when the eNB determines to use the manner of mode switch of the full PDCP parameter exchange, the eNB transmits the mode switch preparation command to UE1 and UE2. After receiving the mode switch preparation command, UE1 and UE2 will maintain their cellular connection, so as to receive data in the cellular link. At this moment, the eNB proceeds with transmitting data to UE1 and UE2, until the core network packets related to the D2D communication are transmitted. Thereafter, the eNB transmits the second mode switch command to UE1 and UE2. In order to ensure continuity of the traffics, the eNB further transmits PDCP status reports respectively to UE1 and UE2. After receiving the second mode switch command, UE1 and UE2 will transmit the next PDCP reception SN and the corresponding HFN to the other party, so that the other party sets the PDCP transmitter parameters accordingly. For example, after receiving the next PDCP reception SN and the corresponding HFN transmitted by UE2, UE1 will reset its PDCP transmitter parameters to be the next PDCP reception SN and the corresponding HFN; likewise, after receiving the next PDCP reception SN and the corresponding HFN transmitted by UE1, UE2 will reset its PDCP transmitter parameters to be the next PDCP reception SN and the corresponding HFN. Furthermore, UE1 and UE2 will retransmit the unsuccessfully received PDCP packets according to the PDCP status reports of their serving eNBs, thereby ensuring continuity of the traffics.

With the method of this embodiment, switch of the UE from the cellular communication mode to the D2D communication mode, or switch of the UE from the D2D communication mode to the D2D communication mode may be achieved, and all the PDCP parameters are exchanged as demanded by the traffics, thereby ensuring continuity of the traffics.

### Embodiment 9

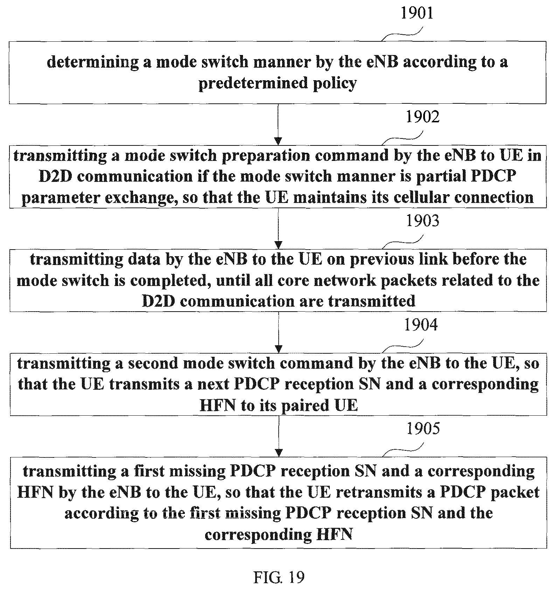

An embodiment of the present disclosure further provides a method of communication mode switch, applicable to an eNB. Different from Embodiment 8, part of the PDCP parameters are exchanged in this embodiment; wherein, contents identical to those in Embodiment 8 shall not be repeatedly described herein any further. Fig. 19 is a flowchart of the method. Referring to Fig. 19, the method includes:
step 1901: determining a mode switch manner by the eNB according to a predetermined policy;
step 1902: transmitting a mode switch preparation command by the eNB to UE in D2D communication if the mode switch manner is partial PDCP parameter exchange, so that the UE maintains its cellular connection;
   wherein, when it is determined by the eNB that the mode switch manner is the partial PDCP parameter exchange, the eNB will transmit the mode switch preparation command to the UE for which it serves, so that the UE prepares for switch of the communication mode; and wherein, after receiving the mode switch preparation command transmitted by the eNB, the UE will maintain its original cellular connection, so as to receive all data in the cellular link;
step 1903: transmitting data by the eNB to the UE on previous link before the mode switch is completed, until all core network packets related to the D2D communication are transmitted;
step 1904: transmitting a second mode switch command by the eNB to the UE, so that the UE transmits a next PDCP reception SN and a corresponding HFN to its paired UE;
   wherein, after the above data transmission is completed, the eNB may transmit the second mode switch command to the UE for which it serves, indicating the UE to perform mode switch; and the UE receiving the second mode switch command will transmit its next PDCP reception SN and the corresponding HFN to its paired UE, so that the paired UE sets its PDCP transmitter parameters accordingly; wherein, the UE may transmit the above information via previous link before the mode switch is completed, and may also transmit the above information via the link after the mode switch is completed, depending on a connection status of the link;
step 1905: transmitting a first missing PDCP reception SN and a corresponding HFN by the eNB to the UE, so that the UE retransmits a PDCP packet according to the first missing PDCP reception SN and the corresponding HFN;
   wherein, in order to ensure continuity of traffics, the eNB needs further to transmit the first missing PDCP reception SN and the corresponding HFN to the UE for which it serves, so that the UE retransmits all transmitted PDCP packets starting from the first missing PDCP reception SN on the link after the mode switch is completed accordingly.

In this embodiment, similar to embodiments 2 and 3, an order of the step of transmitting the second mode switch command by the eNB to the UE for which it serves and the step of transmitting the first missing PDCP reception SN and the corresponding HFN by the eNB to the UE for which it serves is also not limited, and these two steps may be executed in a combined manner.

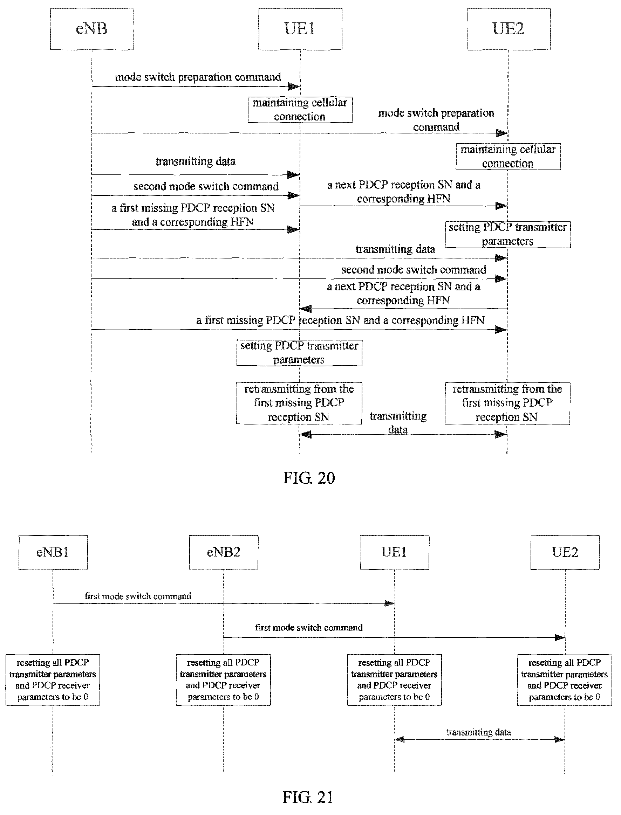

Fig. 20 is a schematic diagram of information exchange between the eNB and the UEs of this embodiment. As shown in Fig. 20, the eNB will transmit the first missing PDCP reception SN and the corresponding HFN to UE1 and UE2, so that UE1 and UE2 retransmit all the transmitted PDCP packets starting from the first missing PDCP reception SN on the link after the mode switch is completed. Other steps are identical to those shown in Fig. 19, the contents of which being incorporated herein, and being not going to be described herein any further.

With the method of this embodiment, switch of the UE from the D2D communication mode to the cellular communication mode may be achieved, and all the PDCP parameters are exchanged as demanded by the traffics, thereby ensuring continuity of the traffics.

Embodiments 10-12 below are applicable to a scenario of switch from the cellular communication mode shown in Fig. 1 to the D2D communication mode shown in Fig. 3. In these embodiments, Embodiment 10 is a case of no PDCP parameter exchange, Embodiment 11 is a case of full PDCP parameter exchange, and Embodiment 12 is a case of partial PDCP parameter exchange.

### Embodiment 10

An embodiment of the present disclosure provides a method of communication mode switch, applicable to an eNB. This method may be carried out by the method shown in Fig. 5. Referring still to Fig. 5, the method includes:
step 501: determining a mode switch manner by the eNB according to a predetermined policy;
step 502: transmitting a first mode switch command by the eNB to UE in D2D communication if the mode switch manner is no PDCP parameter exchange, and resetting all PDCP transmitter parameters and PDCP receiver parameters by the eNB to be 0.

Different from Embodiment 7, as two eNBs serve for two UEs respectively in the cellular communication mode, each eNB will transmit the first mode switch command to the UE for which it serves. And after each eNB transmits the first mode switch command to the UE for which it serves by using the method shown in Fig. 5, each UE completes switch from the cellular communication mode to the D2D communication mode after resetting all its PDCP transmitter parameters and PDCP receiver parameters to be 0, and transmits data in a switched D2D link.

Fig. 21 is a schematic diagram of information exchange between the eNBs and the UEs of this embodiment. As shown in Fig. 21, when the eNBs determine to use the manner of mode switch of the no PDCP parameter exchange, eNB1 transmits the first mode switch command to UE1, and eNB2 transmits the first mode switch command to UE2, and eNB1 and eNB2 reset their respective PDCP transmitter parameters and PDCP receiver parameters to be 0. After receiving the first mode switch commands transmitted by their respective eNBs, UE1 and UE2 will also reset their respective PDCP transmitter parameters and PDCP receiver parameters to be 0. In this way, UE1 and UE2 complete switch from the cellular communication mode to the D2D communication mode, and mutually transmit data in a switched D2D link.

With the method of this embodiment, switch of the UE from the cellular communication mode to the D2D communication mode may be achieved, and no PDCP parameter is exchanged as demanded by the traffics, thereby ensuring continuity of the traffics.

### Embodiment 11

An embodiment of the present disclosure provides a method of communication mode switch, applicable to an eNB. Different from Embodiment 8, after transmitting the mode switch preparation command to the UE for which it serves, the eNB of this embodiment will forward successfully received PDCP packets to a serving eNB of the paired UE, and proceed with transmitting data to the UE, until the core network packets related to the D2D communication and packets forwarded by other eNBs are transmitted. Other contents are identical to those of Embodiment 8, which shall not be described herein any further.

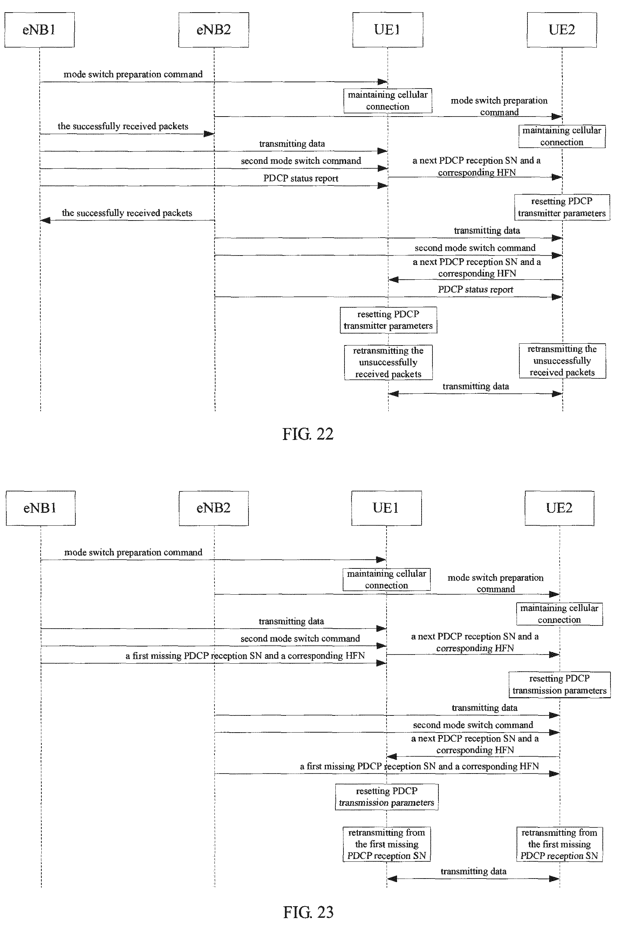

Fig. 22 is a schematic diagram of information exchange between the eNBs and the UEs of this embodiment. As shown in Fig. 22, similar to Fig. 18, when the eNBs determine to use the manner of mode switch of the full PDCP parameter exchange, each eNB will transmit the mode switch preparation command, packets in the cellular link, the second mode switch command and the PDCP status report to the UE for which it serves. Furthermore, each eNB will forward the successfully received PDCP packets to the serving eNB of the paired UE, so as to avoid repeated transmission of the data. After receiving the second mode switch command transmitted by its serving eNB, each UE transmits its next PDCP reception SN and the corresponding HFN to the paired UE; wherein, the transmission may be performed via the original cellular link, and may also be performed via a switched D2D link. Each UE may reset it PDCP transmitter parameters according to the received next PDCP reception SN and the corresponding HFN, and retransmit the unsuccessfully received PDCP packets according to the PDCP status report transmitted by the respective eNB, thereby ensuring continuity of the traffics after the communication mode is switched.

With the method of this embodiment, switch of the UE from the cellular communication mode to the D2D communication mode may be achieved, and all PDCP parameters are exchanged as demanded by the traffics, thereby ensuring continuity of the traffics.

### Embodiment 12

An embodiment of the present disclosure provides a method of communication mode switch, applicable to an eNB. Different from Embodiment 9, in this embodiment, UEs are served by different eNBs. In implementing the method of this embodiment, the processing processes of the eNBs are identical to those of the eNB of Embodiment 9, and the processing processes of the UEs are identical to those of the UE of Embodiment 9.

Fig. 23 is a schematic diagram of information exchange between the eNBs and the UEs of this embodiment. As shown in Fig. 23, similar to Fig. 20, when the eNBs determine to use the manner of mode switch of the no PDCP parameter exchange, each eNB will transmit the mode switch preparation command, packets in the cellular link, the second mode switch command and the first missing PDCP reception SN and the corresponding HFN to the UE for which it serves. After receiving the second mode switch command transmitted by its serving eNB, each UE transmits its next PDCP reception SN and the corresponding HFN to the paired UE; wherein, the transmission may be performed via the original cellular link, and may also be performed via a switched D2D link. Each UE may reset its PDCP transmission parameters according to the received next PDCP reception SN and the corresponding HFN, and retransmit all transmitted PDCP packets starting from the first missing PDCP reception SN on the link after the mode switch is completed according to the first missing PDCP reception SN and the corresponding HFN transmitted by the respective eNB, thereby ensuring continuity of the traffics after the communication mode is switched.

With the method of this embodiment, switch of the UE from the cellular communication mode to the D2D communication mode may be achieved, and all the PDCP parameters are exchanged as demanded by the traffics, thereby ensuring continuity of the traffics.

Corresponding to the methods of embodiments 1, 4, 7 and 10, an embodiment of the present disclosure further provides a method of communication mode switch, applicable to UE in D2D communication, as described in Embodiment 13 below. As the methods are described in embodiments 1, 4, 7 and 10, identical contents shall not be explained in the following description.

### Embodiment 13

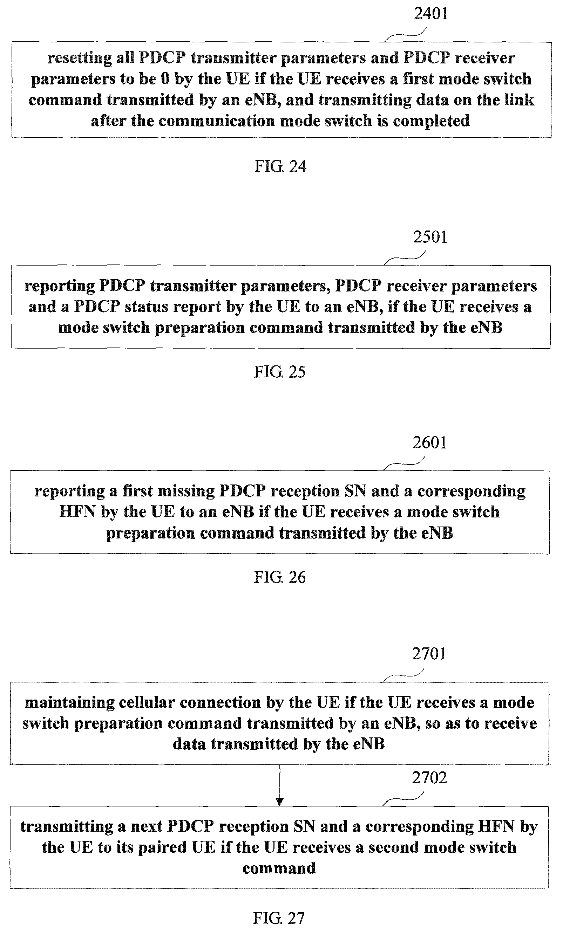

An embodiment of the present disclosure provides a method of communication mode switch, applicable to UE in D2D communication, which is a processing at a UE side corresponding to the methods in embodiments 1, 4, 7 and 10. As the processing at a UE side and the information exchange with the eNB are described in embodiments 1, 4, 7 and 10, identical contents shall not be described herein any further. Fig. 24 is a flowchart of the method. Referring to Fig. 24, the method includes:
step 2401: resetting all PDCP transmitter parameters and PDCP receiver parameters to be 0 by the UE if the UE receives a first mode switch command transmitted by an eNB, and transmitting data on the link after the communication mode switch is completed.

With the method of this embodiment, when the UE receives the first mode switch command transmitted by the eNB, the UE resets all its PDCP transmitter parameters and PDCP receiver parameters to be 0, thereby completing switch of a communication mode. As this method is used in a scenario where no PDCP parameter is needed to be exchanged, continuity of the traffics is ensured.

Corresponding to the methods of embodiments 2 and 5, an embodiment of the present disclosure further provides a method of communication mode switch, applicable to UE in D2D communication, as described in Embodiment 14 below. As the methods are described in embodiments 2 and 5, identical contents shall not be explained in the following description.

### Embodiment 14

An embodiment of the present disclosure provides a method of communication mode switch, applicable to UE in D2D communication, which is a processing at a UE side corresponding to the methods in embodiments 2 and 5. As the processing at a UE side and the information exchange with the eNB are described in embodiments 2 and 5, identical contents shall not be described herein any further. Fig. 25 is a flowchart of the method. Referring to Fig. 25, the method includes:
step 2501: reporting PDCP transmitter parameters, PDCP receiver parameters and a PDCP status report by the UE to an eNB, if the UE receives a mode switch preparation command transmitted by the eNB.

In this embodiment, corresponding to the method of Embodiment 2, after the UE of this embodiment reports the above information, the eNB takes the PDCP transmitter parameters as transmitter parameters of downlink between the eNB and paired UE in D2D communication of the UE, takes the PDCP receiver parameters as receiver parameters of uplink between the eNB and the paired UE in D2D communication of the UE, and transmits the PDCP status report of the UE to the paired UE in D2D communication of the UE.

In this embodiment, corresponding to the method of Embodiment 5, after the UE of this embodiment reports the above information, the eNB forwards the PDCP transmitter parameters, PDCP receiver parameters and PDCP status report of the UE to a serving eNB of the paired UE in D2D communication of the UE, sets PDCP transmitter parameters of downlink between it and the UE and PDCP receiver parameters of uplink between it and the UE according to the PDCP transmitter parameters and the PDCP receiver parameters of the paired UE, and transmits the PDCP status report of the paired UE to the UE.

In this embodiment, if the UE receives the PDCP status report of the paired UE in D2D communication, the UE will retransmit unsuccessfully received PDCP packets on the link after the communication mode switch is completed according to the PDCP status report of the paired UE in D2D communication after receiving the second mode switch command transmitted by the eNB.

With the method of this embodiment, switch of the UE from the D2D communication mode to the cellular communication mode may be achieved, and all the PDCP parameters may be exchanged as demanded by the traffics, thereby ensuring continuity of the traffics.

Corresponding to the methods of embodiments 3 and 6, an embodiment of the present disclosure further provides a method of communication mode switch, applicable to UE in D2D communication, as described in Embodiment 15 below. As the methods are described in embodiments 3 and 6, identical contents shall not be explained in the following description.

### Embodiment 15

An embodiment of the present disclosure provides a method of communication mode switch, applicable to UE in D2D communication, which is a processing at a UE side corresponding to the methods in embodiments 3 and 6. As the processing at a UE side and the information exchange with the eNB are described in embodiments 3 and 6, identical contents shall not be described herein any further. Fig. 26 is a flowchart of the method. Referring to Fig. 26, the method includes:
step 2601: reporting a first missing PDCP reception SN and a corresponding HFN by the UE to an eNB if the UE receives a mode switch preparation command transmitted by the eNB.

In this embodiment, corresponding to the method of Embodiment 3, after the UE of this embodiment reports the above information, the eNB resets its PDCP transmitter parameters and PDCP receiver parameters according to the first missing PDCP reception SN and the corresponding HFN of the UE, and transmits the first missing PDCP reception SN and the corresponding HFN of the UE to paired UE in D2D communication of the UE, so that the paired UE retransmits corresponding data.

In this embodiment, corresponding to the method of Embodiment 6, after the UE of this embodiment reports the above information, the eNB forwards the first missing PDCP reception SN and the corresponding HFN of the UE to a serving eNB of the paired UE in D2D communication, resets its PDCP transmitter and receiver parameters according to the received first missing PDCP reception SN and corresponding HFN of the paired UE, and transmits the first missing PDCP reception SN and the corresponding HFN of the paired UE to the UE, so that the UE retransmits corresponding data.

In this embodiment, if the UE receives the first missing PDCP reception SN and the corresponding HFN of the paired UE in the D2D communication, the UE retransmits all transmitted PDCP packets starting from the first missing PDCP reception SN of the paired UE on the link after the communication mode switch is completed after receiving the second mode switch command transmitted by the eNB.

With the method of this embodiment, switch of the UE from the D2D communication mode to the cellular communication mode may be achieved, and part of the PDCP parameters may be exchanged as demanded by the traffics, thereby ensuring continuity of the traffics.

Corresponding to the methods of embodiments 8-9 and 11-12, an embodiment of the present disclosure further provides a method of communication mode switch, applicable to UE in D2D communication, as described in Embodiment 16 below. As the methods are described in embodiments 8-9 and 11-12, identical contents shall not be explained in the following description.

### Embodiment 16

An embodiment of the present disclosure provides a method of communication mode switch, applicable to UE in D2D communication, which is a processing at a UE side corresponding to the methods in embodiments 8-9 and 11-12. As the processing at a UE side and the information exchange with the eNB are described in embodiments 8-9 and 11-12, identical contents shall not be described herein any further. Fig. 27 is a flowchart of the method. Referring to Fig. 27 the method includes:
step 2701: maintaining cellular connection by the UE if the UE receives a mode switch preparation command transmitted by an eNB, so as to receive data transmitted by the eNB; and
step 2702: transmitting a next PDCP reception SN and a corresponding HFN by the UE to its paired UE if the UE receives a second mode switch command.

In this embodiment, if the UE receives a next PDCP reception SN and a corresponding HFN transmitted by the paired UE, the UE sets PDCP transmitter parameters as the received next PDCP reception SN and corresponding HFN.

In this embodiment, if the UE receives a PDCP status report from a serving eNB, the UE retransmits unsuccessfully received PDCP packets on the link after the communication mode switch is completed according to the PDCP status report from the serving eNB.

In this embodiment, if the UE receives a first missing PDCP reception SN and a corresponding HFN from the serving eNB, the UE retransmits all the transmitted PDCP packets by the UE starting from the first missing PDCP reception SN on the link after the communication mode switch is completed.

With the method of this embodiment, switch of the UE from the cellular communication mode to the D2D communication mode may be achieved, and part of the PDCP parameters may be exchanged as demanded by the traffics, thereby ensuring continuity of the traffics.

Corresponding to the methods of embodiments 1, 4, 7 and 10, an embodiment of the present disclosure further provides an eNB, as described in Embodiment 17 below. As principles of the eNB for solving problems are similar to those of the methods of embodiments 1, 4, 7 and 10, the implementations of the methods of embodiments 1, 4, 7 and 10 may be referred to for a particular implementation of the eNB, and the repeated parts shall not be described herein any further.

### Embodiment 17

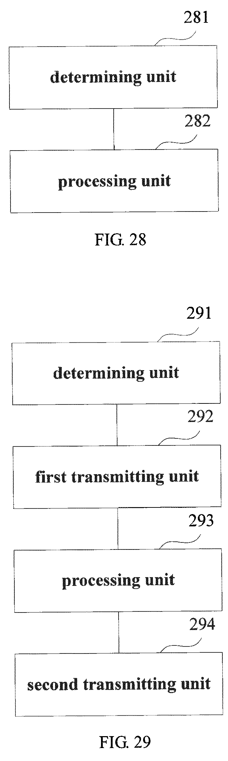

An embodiment of the present disclosure provides an eNB. Fig. 28 is a schematic diagram of a structure of the eNB. Referring to Fig. 28, the eNB includes:
a determining unit 281 configured to determine a mode switch manner according to a predetermined policy; and
a processing unit 282 configured to transmit a first mode switch command to UE in D2D communication if the mode switch manner determined by the determining unit 281 is no PDCP parameters exchange, and reset all PDCP transmitter parameters and PDCP receiver parameters to be 0.

With the eNB of this embodiment, switch of the communication mode may be achieved while ensuring continuity of the traffics.

Corresponding to the method of Embodiment 2, an embodiment of the present disclosure further provides an eNB, as described in Embodiment 18 below. As principles of the eNB for solving problems are similar to that of the method of Embodiment 2, the implementation of the method of Embodiment 2 may be referred to for a particular implementation of the eNB, and the repeated parts shall not be described herein any further.

### Embodiment 18

An embodiment of the present disclosure provides an eNB. Fig. 29 is a schematic diagram of a structure of the eNB. Referring to Fig. 29, the eNB includes:
a determining unit 291 configured to determine a mode switch manner according to a predetermined policy;
a first transmitting unit 292 configured to transmit a mode switch preparation command to UE in D2D communication if the mode switch manner determined by the determining unit 291 is full PDCP parameter exchange;
a processing unit 293 configured to, if the eNB receives PDCP transmitter parameters, PDCP receiver parameters and a PDCP status report that are reported by the UE, take the PDCP transmitter parameters as transmitter parameters of downlink between the eNB and paired UE in D2D communication of the UE, take the PDCP receiver parameters as receiver parameters of uplink between the eNB and the paired UE, and transmit the PDCP status report to the paired UE; and
a second transmitting unit 294 configured to transmit a second mode switch command to the UE.

With the eNB of this embodiment, switch of the communication mode may be achieved while ensuring continuity of the traffics.

Corresponding to the method of Embodiment 3, an embodiment of the present disclosure further provides an eNB, as described in Embodiment 19 below. As principles of the eNB for solving problems are similar to that of the method of Embodiment 3, the implementation of the method of Embodiment 3 may be referred to for a particular implementation of the eNB, and the repeated parts shall not be described herein any further.

### Embodiment 19

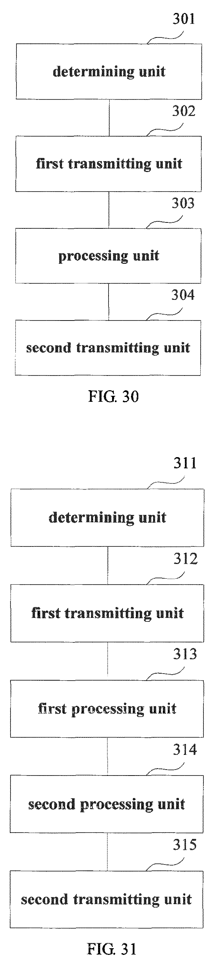

An embodiment of the present disclosure provides an eNB. Fig. 30 is a schematic diagram of a structure of the eNB. Referring to Fig. 30, the eNB includes:
a determining unit 301 configured to determine a mode switch manner according to a predetermined policy;
a first transmitting unit 302 configured to transmit a mode switch preparation command to UE in D2D communication if the mode switch manner determined by the determining unit 301 is partial PDCP parameter exchange;
a processing unit 303 configured to, if the eNB receives a first missing PDCP reception SN and a corresponding HFN reported by the UE, reset PDCP transmitter parameters and PDCP receiver parameters of a link between the eNB and paired UE in D2D communication of the UE according to the first missing PDCP reception SN and the corresponding HFN, and transmit the first missing PDCP reception SN and the corresponding HFN to the paired UE in D2D communication of the UE; and
a second transmitting unit 304 configured to transmit a second mode switch command to the UE.

With the eNB of this embodiment, switch of the communication mode may be achieved while ensuring continuity of the traffics.

Corresponding to the method of Embodiment 5, an embodiment of the present disclosure further provides an eNB, as described in Embodiment 20 below. As principles of the eNB for solving problems are similar to that of the method of Embodiment 5, the implementation of the method of Embodiment 5 may be referred to for a particular implementation of the eNB, and the repeated parts shall not be described herein any further.

### Embodiment 20

An embodiment of the present disclosure provides an eNB. Fig. 31 is a schematic diagram of a structure of the eNB. Referring to Fig. 31, the eNB includes:
a determining unit 311 configured to determine a mode switch manner according to a predetermined policy;
a first transmitting unit 312 configured to transmit a mode switch preparation command to UE in D2D communication if the mode switch manner determined by the determining unit 311 is full PDCP parameter exchange; and
a first processing unit 313 configured to, if the eNB receives PDCP transmitter parameters, PDCP receiver parameters and a PDCP status report that are reported by the UE, forward the PDCP transmitter parameters, the PDCP receiver parameters and the PDCP status report to a serving eNB of paired UE in D2D communication of the UE.

In an embodiment, the eNB further includes:
a second processing unit 314 configured to, if the eNB receives PDCP transmitter parameters, PDCP receiver parameters and a PDCP status report of the paired UE transmitted by the serving eNB of the paired UE, take the PDCP transmitter parameters of the paired UE as transmitter parameters of downlink between the eNB and the UE, take the PDCP receiver parameters of the paired UE as receiver parameters of uplink between the eNB and the UE, and transmit the PDCP status report of the paired UE to the UE; and
a second transmitting unit 315 configured to transmit a second mode switch command to the UE.

With the eNB of this embodiment, switch of the communication mode may be achieved while ensuring continuity of the traffics.

Corresponding to the method of Embodiment 6, an embodiment of the present disclosure further provides an eNB, as described in Embodiment 21 below. As principles of the eNB for solving problems are similar to that of the method of Embodiment 6, the implementation of the method of Embodiment 6 may be referred to for a particular implementation of the eNB, and the repeated parts shall not be described herein any further.

### Embodiment 21

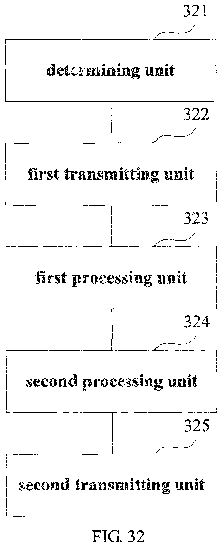

An embodiment of the present disclosure provides an eNB. Fig. 32 is a schematic diagram of a structure of the eNB. Referring to Fig. 32, the eNB includes:
a determining unit 321 configured to determine a mode switch manner according to a predetermined policy;
a first transmitting unit 322 configured to transmit a mode switch preparation command to UE in D2D communication if the mode switch manner determined by the determining unit 321 is partial PDCP parameter exchange; and
a first processing unit 323 configured to, if the eNB receives a first missing PDCP reception SN and a corresponding HFN reported by the UE, forward the first missing PDCP reception SN and the corresponding HFN of the UE to a serving eNB of paired UE in D2D communication of the UE.

In an embodiment, the eNB further includes:
a second processing unit 324 configured to, if the eNB receives a first missing PDCP reception SN and a corresponding HFN of the paired UE transmitted by the serving eNB of the paired UE, reset PDCP transmitter parameters and PDCP receiver parameters of a link between the eNB and the UE according to the first missing PDCP reception SN and the corresponding HFN, and transmit the first missing PDCP reception SN and the corresponding HFN of the paired UE to the UE; and
a second transmitting unit 325 configured to transmit a second mode switch command to the UE.

With the eNB of this embodiment, switch of the communication mode may be achieved while ensuring continuity of the traffics.

Corresponding to the methods of embodiments 8-9 and 11-12, an embodiment of the present disclosure further provides an eNB, as described in Embodiment 22 below. As principles of the eNB for solving problems are similar to those of the methods of embodiments 8-9 and 11-12, the implementations of the methods of embodiments 8-9 and 11-12 may be referred to for a particular implementation of the eNB, and the repeated parts shall not be described herein any further.

### Embodiment 22

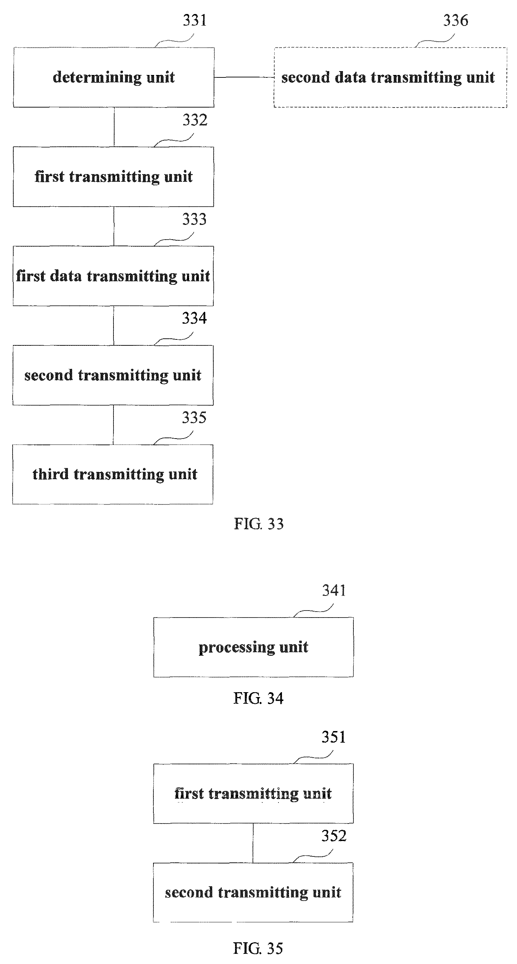

An embodiment of the present disclosure provides an eNB. Fig. 33 is a schematic diagram of a structure of the eNB. Referring to Fig. 33, the eNB includes:
a determining unit 331 configured to determine a mode switch manner according to a predetermined policy;
a first transmitting unit 332 configured to transmit a mode switch preparation command to UE in D2D communication if the mode switch manner determined by the determining unit 331 is full PDCP parameter exchange or partial PDCP parameter exchange, so that the UE maintains its cellular connection;
a first data transmitting unit 333 configured to transmit data to the UE on previous link before the mode switch is completed, until all core network packets related to the D2D communication are transmitted, or transmit data to the UE on the previous link before the mode switch is completed, until all the core network packets related to the D2D communication and packets forwarded by other eNBs are transmitted;
a second transmitting unit 334 configured to transmit a second mode switch command to the UE, so that the UE transmits a next PDCP reception SN and a corresponding HFN to its paired UE; and
a third transmitting unit 335 configured to transmit a PDCP status report or a first missing PDCP reception SN and a corresponding HFN to the UE, so that the UE retransmits a PDCP packet according to the PDCP status report or the first missing PDCP reception SN and the corresponding HFN.

In an embodiment, the eNB further includes:
a second data transmitting unit 336 configured to, when the mode switch manner is full PDCP parameter exchange, forward successfully received PDCP packets to the serving eNB of the paired UE in D2D communication of the UE.

With the eNB of this embodiment, switch of the communication mode may be achieved while ensuring continuity of the traffics.

Corresponding to the method of Embodiment 13, an embodiment of the present disclosure further provides UE, as described in Embodiment 23 below. As principles of the UE for solving problems are similar to that of the method of Embodiment 13, the implementation of the method of Embodiment 13 may be referred to for a particular implementation of the UE, and the repeated parts shall not be described herein any further.

### Embodiment 23

An embodiment of the present disclosure provides UE. Fig. 34 is a schematic diagram of a structure of the UE. Referring to Fig. 34, the UE includes:
a processing unit 341 configured to reset all PDCP transmitter parameters and PDCP receiver parameters to be 0 if the UE receives a first mode switch command transmitted by an eNB, and transmit data on the link after the communication mode switch is completed.

With the UE of this embodiment, switch of the communication mode may be achieved while ensuring continuity of the traffics.

Corresponding to the method of Embodiment 14, an embodiment of the present disclosure further provides UE, as described in Embodiment 24 below. As principles of the UE for solving problems are similar to that of the method of Embodiment 14, the implementation of the method of Embodiment 14 may be referred to for a particular implementation of the UE, and the repeated parts shall not be described herein any further.

### Embodiment 24

An embodiment of the present disclosure provides UE. Fig. 35 is a schematic diagram of a structure of the UE. Referring to Fig. 35, the UE includes:
a first transmitting unit 351 configured to, if the UE receives a mode switch preparation command transmitted by an eNB, report PDCP transmitter parameters, PDCP receiver parameters and a PDCP status report to the eNB.

In this embodiment, if the UE and paired UE in communication belong to the same eNB, the eNB takes the PDCP transmitter parameters as transmitter parameters of downlink between the eNB and the paired UE in D2D communication of the UE, takes the PDCP receiver parameters as receiver parameters of uplink between the eNB and the paired UE in D2D communication of the UE, and transmits the PDCP status report to the paired UE in D2D communication of the UE.

In this embodiment, if the UE and the paired UE in communication do not belong to the same eNB, the eNB forwards the PDCP transmitter parameters, PDCP receiver parameters and PDCP status report to a serving eNB of the paired UE in D2D communication of the UE, and when PDCP transmitter parameters, PDCP receiver parameters and a PDCP status report of the paired UE transmitted by the serving eNB of the paired UE are received, the eNB takes the PDCP transmitter parameters of the paired UE as transmitter parameters of downlink between the eNB and the UE, takes the PDCP receiver parameters of the paired UE as receiver parameters of uplink between the eNB and the UE, and transmits the PDCP status report of the paired UE to the UE.

In an embodiment, the UE further includes:
a second transmitting unit 352 configured to, if the UE receives a PDCP status report of the paired UE in D2D communication, retransmit unsuccessfully received PDCP packets on the link after the communication mode switch is completed according to the PDCP status report of the paired UE in D2D communication.

With the UE of this embodiment, switch of the communication mode may be achieved while ensuring continuity of the traffics.

Corresponding to the method of Embodiment 15, an embodiment of the present disclosure further provides UE, as described in Embodiment 25 below. As principles of the UE for solving problems are similar to that of the method of Embodiment 15, the implementation of the method of Embodiment 15 may be referred to for a particular implementation of the UE, and the repeated parts shall not be described herein any further.

### Embodiment 25

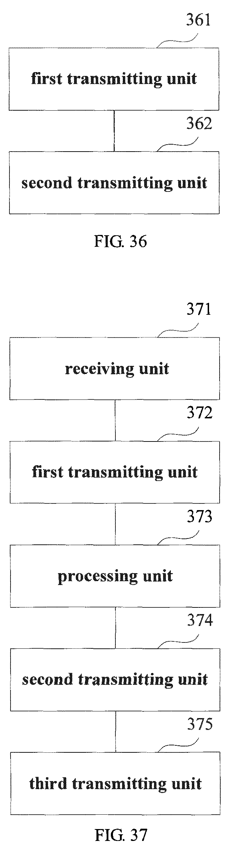

An embodiment of the present disclosure provides UE. Fig. 36 is a schematic diagram of a structure of the UE. Referring to Fig. 36, the UE includes:
a first transmitting unit 361 configured to, if the UE receives a mode switch preparation command transmitted by an eNB, report a first missing PDCP reception SN and a corresponding HFN to the eNB.

In this embodiment, if the UE and paired UE in communication belong to the same eNB, the eNB resets PDCP transmitter parameters and PDCP receiver parameters of a link between the eNB and paired UE in communication of the UE according to the first missing PDCP reception SN and the corresponding HFN of the UE, and transmits the first missing PDCP reception SN and the corresponding HFN to the paired UE in communication of the UE.

In this embodiment, if the UE and the paired UE in communication do not belong to the same eNB, the eNB forwards the first missing PDCP reception SN and the corresponding HFN of the UE to a serving eNB of the paired UE in communication of the UE, and when a first missing PDCP reception SN and a corresponding HFN of the paired UE transmitted by the serving eNB of the paired UE are received, the eNB resets PDCP transmitter and receiver parameters of a link between the eNB and the UE accordingly, and transmits the first missing PDCP reception SN and the corresponding HFN of the paired UE in communication to the UE.

In an embodiment, the UE further includes:
a second transmitting unit 362 configured to, if the UE receives the first missing PDCP reception SN and the corresponding HFN of the paired UE in D2D communication, retransmit all transmitted PDCP packets starting from the first missing PDCP reception SN of the paired UE on the link after the communication mode switch is completed.

With the UE of this embodiment, switch of the communication mode may be achieved while ensuring continuity of the traffics.

Corresponding to the method of Embodiment 16, an embodiment of the present disclosure further provides UE, as described in Embodiment 26 below. As principles of the UE for solving problems are similar to that of the method of Embodiment 16, the implementation of the method of Embodiment 16 may be referred to for a particular implementation of the UE, and the repeated parts shall not be described herein any further.

### Embodiment 26

An embodiment of the present disclosure provides UE. Fig. 37 is a schematic diagram of a structure of the UE. Referring to Fig. 37, the UE includes:
a receiving unit 371 configured to, if the UE receives a mode switch preparation command transmitted by an eNB, maintain cellular connection, so as to receive data transmitted by the eNB; and
a first transmitting unit 372 configured to, if the UE receives a second mode switch command, transmit a next PDCP reception SN and a corresponding HFN to paired UE in D2D communication of the UE.

In an embodiment, the UE further includes:
a processing unit 373 configured to, if the UE receives a next PDCP reception SN and a corresponding HFN transmitted by the paired UE, set its PDCP transmitter parameters as the received next PDCP reception SN and the corresponding HFN.

In an embodiment, the UE further includes:
a second transmitting unit 374 configured to, if the UE receives a PDCP status report from a serving eNB, retransmit unsuccessfully received PDCP packets on the link after the communication mode switch is completed according to the PDCP status report from the serving eNB.

In an embodiment, the UE further includes:
a third transmitting unit 375 configured to, if the UE receives a first missing PDCP reception SN and a corresponding HFN from the serving eNB, retransmit all transmitted PDCP packets starting from the first missing PDCP reception SN on the link after the communication mode switch is completed.

With the UE of this embodiment, switch of the communication mode may be achieved while ensuring continuity of the traffics.

An embodiment of the present disclosure further provides a communication system, including the eNB as described in Embodiment 17 and at least two UEs as described in Embodiment 23, or including the eNB as described in Embodiment 18 and at least two UEs as described in Embodiment 24, or including the eNB as described in Embodiment 19 and at least two UEs as described in Embodiment 25, or including the eNB as described in Embodiment 20 and at least two UEs as described in Embodiment 24, or including the eNB as described in Embodiment 21 and at least two UEs as described in Embodiment 25, or including the eNB as described in Embodiment 22 and at least two UEs as described in Embodiment 26.

An embodiment of the present disclosure further provides a computer-readable program, wherein when the program is executed in an eNB, the program enables a computer to carry out the method of communication mode switch as described in embodiments 1-12 in the eNB.

An embodiment of the present disclosure further provides a storage medium in which a computer-readable program is stored, wherein the computer-readable program enables a computer to carry out the method of communication mode switch as described in embodiments 1-12 in an eNB.

An embodiment of the present disclosure further provides a computer-readable program, wherein when the program is executed in terminal equipment, the program enables a computer to carry out the method of communication mode switch as described in embodiments 13-16 in the terminal equipment.

An embodiment of the present disclosure further provides a storage medium in which a computer-readable program is stored, wherein the computer-readable program enables a computer to carry out the method of communication mode switch as described in embodiments 13-16 in terminal equipment.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principles of the present disclosure, and such variants and modifications fall within the scope of the present disclosure.

## Claims

1. A method of communication mode switch, applicable to an eNB, the method comprising:
determining a mode switch manner by the eNB according to a predetermined policy; and
transmitting a first mode switch command by the eNB to user equipment (UE) in device to device (D2D) communication if the mode switch manner is no packet data convergence protocol (PDCP) parameter exchange, and resetting all PDCP transmitter parameters and PDCP receiver parameters to be 0.

2. A method of communication mode switch, applicable to UE in a D2D communication process, the method comprising:
resetting all PDCP transmitter parameters and PDCP receiver parameters to be 0 by the UE if the UE receives a first mode switch command transmitted by an eNB, and transmitting data by the UE on the link after the communication mode switch is completed.

3. A method of communication mode switch, applicable to an eNB, the method comprising:
determining a mode switch manner by the eNB according to a predetermined policy;
transmitting a mode switch preparation command by the eNB to UE in D2D communication if the mode switch manner is full PDCP parameter exchange;
taking PDCP transmitter parameters by the eNB as transmitter parameters of downlink between the eNB and paired UE in D2D communication of the UE, taking PDCP receiver parameters by the eNB as receiver parameters of uplink between the eNB and the paired UE in D2D communication of the UE, and transmitting PDCP status report by the eNB to the paired UE in D2D communication of the UE, if the PDCP transmitter parameters, PDCP receiver parameters and PDCP status report that are reported by the UE are received; and
transmitting a second mode switch command by the eNB to the UE.

4. A method of communication mode switch, applicable to UE in a D2D communication process, the method comprising:
reporting PDCP transmitter parameters, PDCP receiver parameters and a PDCP status report by the UE to an eNB, if the UE receives a mode switch preparation command transmitted by the eNB, so that the eNB takes the PDCP transmitter parameters as transmitter parameters of downlink between the eNB and paired UE in D2D communication of the UE, takes the PDCP receiver parameters as receiver parameters of uplink between the eNB and the paired UE in D2D communication of the UE, and transmits the PDCP status report to the paired UE in D2D communication of the UE.

5. The method according to claim 4, wherein if the UE receives the PDCP status report of the paired UE in D2D communication, the method further comprises:
retransmitting unsuccessfully received PDCP packets by the UE on the link after the communication mode switch is completed according to the PDCP status report of the paired UE in D2D communication.

6. A method of communication mode switch, applicable to an eNB, the method comprising:
determining a mode switch manner by the eNB according to a predetermined policy;
transmitting a mode switch preparation command by the eNB to UE in D2D communication if the mode switch manner is partial PDCP parameter exchange;
if a first missing PDCP reception serial number (SN) and a corresponding hyper frame number (HFN) reported by the UE are received, resetting PDCP transmitter parameters and PDCP receiver parameters of a link between the eNB and paired UE in D2D communication of the UE by the eNB according to the first missing PDCP reception SN and the corresponding HFN, and transmitting the first missing PDCP reception SN and the corresponding HFN by the eNB to the paired UE in D2D communication of the UE; and
transmitting a second mode switch command by the eNB to the UE.

7. A method of communication mode switch, applicable to UE in a D2D communication process, the method comprising:
reporting a first missing PDCP reception SN and a corresponding HFN by the UE to an eNB if the UE receives a mode switch preparation command transmitted by the eNB, so that the eNB resets PDCP transmitter parameters and PDCP receiver parameters of a link between the eNB and paired UE in D2D communication of the UE according to the first missing PDCP reception SN and the corresponding HFN, and transmits the first missing PDCP reception SN and the corresponding HFN to the paired UE in D2D communication of the UE.

8. The method according to claim 7, wherein if the UE receives a first missing PDCP reception SN and a corresponding HFN of the paired UE in D2D communication, the method further comprises:
retransmitting all transmitted PDCP packets by the UE starting from the first missing PDCP reception SN of the paired UE on the link after the communication mode switch is completed.

9. A method of communication mode switch, applicable to an eNB, the method comprising:
determining a mode switch manner by the eNB according to a predetermined policy;
transmitting a mode switch preparation command by the eNB to UE in D2D communication if the mode switch manner is full PDCP parameter exchange; and
forwarding PDCP transmitter parameters, PDCP receiver parameters and PDCP status report that are reported by the UE by the eNB to a serving eNB of paired UE in D2D communication of the UE if the PDCP transmitter parameters, the PDCP receiver parameters and the PDCP status report are received.

10. The method according to claim 9, wherein if the eNB receives PDCP transmitter parameters, PDCP receiver parameters and a PDCP status report of the paired UE transmitted by the serving eNB of the paired UE, the method further comprises:
taking the PDCP transmitter parameters of the paired UE by the eNB as transmitter parameters of downlink between the eNB and the UE, taking the PDCP receiver parameters of the paired UE by the eNB as receiver parameters of uplink between the eNB and the UE, and transmitting the PDCP status report of the paired UE by the eNB to the UE; and
transmitting a second mode switch command by the eNB to the UE.

11. A method of communication mode switch, applicable to UE in a D2D communication process, the method comprising:
if the UE receives a mode switch preparation command transmitted by an eNB, reporting PDCP transmitter parameters, PDCP receiver parameters and a PDCP status report by the UE to the eNB, so that the eNB forwards the PDCP transmitter parameters, the PDCP receiver parameters and the PDCP status report to a serving eNB of paired UE in D2D communication of the UE.

12. The method according to claim 11, wherein if the UE receives a PDCP status report of the paired UE in D2D communication, the method further comprises:
retransmitting unsuccessfully received PDCP packets by the UE on the link after the communication mode switch is completed according to the PDCP status report of the paired UE.

13. A method of communication mode switch, applicable to an eNB, the method comprising:
determining a mode switch manner by the eNB according to a predetermined policy;
transmitting a mode switch preparation command by the eNB to UE in D2D communication if the mode switch manner is partial PDCP parameter exchange; and
if a first missing PDCP reception SN and a corresponding HFN reported by the UE are received, forwarding the first missing PDCP reception SN and the corresponding HFN of the UE by the eNB to a serving eNB of paired UE in D2D communication of the UE.

14. The method according to claim 13, wherein if the eNB receives a first missing PDCP reception SN and a corresponding HFN of the paired UE transmitted by the serving eNB of the paired UE, the method further comprises:
resetting PDCP transmitter parameters and PDCP receiver parameters of a link between the eNB and the paired UE in D2D communication of the UE by the eNB according to the first missing PDCP reception SN and the corresponding HFN of the paired UE, and transmitting the first missing PDCP reception SN and the corresponding HFN of the paired UE to the UE; and
transmitting a second mode switch command by the eNB to the UE.

15. A method of communication mode switch, applicable to UE in a D2D communication process, the method comprising:
if the UE receives a mode switch preparation command transmitted by an eNB, reporting a first missing PDCP reception SN and a corresponding HFN by the UE to the eNB, so that the eNB forwards the first missing PDCP reception SN and the corresponding HFN to a serving eNB of paired UE in D2D communication of the UE.

16. The method according to claim 15, wherein if the UE receives a first missing PDCP reception SN and a corresponding HFN of the paired UE in D2D communication, the method further comprises:
retransmitting all the transmitted PDCP packets by the UE starting from the first missing PDCP reception SN of the paired UE on the link after the communication mode switch is completed.

17. A method of communication mode switch, applicable to an eNB, the method comprising:
determining a mode switch manner by the eNB according to a predetermined policy;
transmitting a mode switch preparation command by the eNB to UE in D2D communication if the mode switch manner is full PDCP parameter exchange or partial PDCP parameter exchange, so that the UE maintains its cellular connection;
transmitting data by the eNB to the UE on previous link before the mode switch is completed, until all core network packets related to the D2D communication are transmitted, or transmitting data by the eNB to the UE on the previous link before the mode switch is completed, until all the core network packets related to the D2D communication and packets forwarded by other eNBs are transmitted;
transmitting a second mode switch command by the eNB to the UE, so that the UE transmits a next PDCP reception SN and a corresponding HFN to its paired UE; and
transmitting a PDCP status report or a first missing PDCP reception SN and a corresponding HFN by the eNB to the UE, so that the UE retransmits a PDCP packet according to the PDCP status report or the first missing PDCP reception SN and the corresponding HFN.

18. The method according to claim 17, wherein if the mode switch manner is full PDCP parameter exchange, the method further comprises:
forwarding successfully received PDCP packets by the eNB to a serving eNB of the paired UE in D2D communication of the UE.

19. A method of communication mode switch, applicable to UE, the method comprising:
if the UE receives a mode switch preparation command transmitted by an eNB, maintaining cellular connection by the UE, so as to receive data transmitted by the eNB; and
if the UE receives a second mode switch command, transmitting a next PDCP reception SN and a corresponding HFN by the UE to its paired UE.

20. The method according to claim 19, wherein if the UE receives a next PDCP reception SN and a corresponding HFN transmitted by the paired UE, the method further comprises:
setting PDCP transmitter parameters by the UE to be the received next PDCP reception SN and the corresponding HFN.

21. The method according to claim 20, wherein if the UE receives a PDCP status report from a serving eNB, the method further comprises:
retransmitting unsuccessfully received PDCP packets by the UE on the link after the communication mode switch is completed according to the PDCP status report from the serving eNB.

22. The method according to claim 20, wherein if the UE receives a first missing PDCP reception SN and a corresponding HFN from the serving eNB, the method further comprises:
retransmitting all transmitted PDCP packets by the UE starting from the first missing PDCP reception SN on the link after the communication mode switch is completed.

23. An eNB, comprising:
a determining unit configured to determine a mode switch manner according to a predetermined policy; and
a processing unit configured to transmit a first mode switch command to UE in D2D communication if the mode switch manner determined by the determining unit is no PDCP parameters exchange, and reset all PDCP transmitter parameters and PDCP receiver parameters to be 0.

24. UE, comprising:
a processing unit configured to reset all PDCP transmitter parameters and PDCP receiver parameters to be 0 if the UE receives a first mode switch command transmitted by an eNB, and transmit data on the link after the communication mode switch is completed.

25. An eNB, comprising:
a determining unit configured to determine a mode switch manner according to a predetermined policy;
a first transmitting unit configured to transmit a mode switch preparation command to UE in D2D communication if the mode switch manner determined by the determining unit is full PDCP parameter exchange;
a processing unit configured to, if the eNB receives PDCP transmitter parameters, PDCP receiver parameters and a PDCP status report that are reported by the UE, take the PDCP transmitter parameters as transmitter parameters of downlink between the eNB and paired UE in D2D communication of the UE, take the PDCP receiver parameters as receiver parameters of uplink between the eNB and the paired UE, and transmit the PDCP status report to the paired UE; and
a second transmitting unit configured to transmit a second mode switch command to the UE.

26. UE, comprising:
a first transmitting unit configured to, if the UE receives a mode switch preparation command transmitted by an eNB, report PDCP transmitter parameters, PDCP receiver parameters and a PDCP status report to the eNB, so that the eNB takes the PDCP transmitter parameters as transmitter parameters of downlink between the eNB and paired UE in D2D communication of the UE, takes the PDCP receiver parameters as receiver parameters of uplink between the eNB and the paired UE, and transmits the PDCP status report to the paired UE.

27. The UE according to claim 26, wherein the UE further comprises:
a second transmitting unit configured to, if the UE receives a PDCP status report of the paired UE in D2D communication, retransmit unsuccessfully received PDCP packets on the link after the communication mode switch is completed according to the PDCP status report of the paired UE in D2D communication.

28. An eNB, comprising:
a determining unit configured to determine a mode switch manner according to a predetermined policy;
a first transmitting unit configured to transmit a mode switch preparation command to UE in D2D communication if the mode switch manner determined by the determining unit is partial PDCP parameter exchange;
a processing unit configured to, if the eNB receives a first missing PDCP reception SN and a corresponding HFN reported by the UE, reset PDCP transmitter parameters and PDCP receiver parameters of a link between the eNB and paired UE in D2D communication of the UE according to the first missing PDCP reception SN and the corresponding HFN, and transmit the first missing PDCP reception SN and the corresponding HFN to the paired UE in D2D communication of the UE; and
a second transmitting unit configured to transmit a second mode switch command to the UE.

29. UE, comprising:
a first transmitting unit configured to, if the UE receives a mode switch preparation command transmitted by an eNB, report a first missing PDCP reception SN and a corresponding HFN to the eNB, so that the eNB resets PDCP transmitter parameters and PDCP receiver parameters of a link between the eNB and paired UE in D2D communication of the UE according to the first missing PDCP reception SN and the corresponding HFN, and transmits the first missing PDCP reception SN and the corresponding HFN to the paired UE in D2D communication of the UE.

30. The UE according to claim 29, wherein the UE further comprises:
a second transmitting unit configured to, if the UE receives a first missing PDCP reception SN and a corresponding HFN of the paired UE in D2D communication, retransmit all transmitted PDCP packets starting from the first missing PDCP reception SN of the paired UE on the link after the communication mode switch is completed.

31. An eNB, comprising:
a determining unit configured to determine a mode switch manner according to a predetermined policy;
a first transmitting unit configured to transmit a mode switch preparation command to UE in D2D communication if the mode switch manner determined by the determining unit is full PDCP parameter exchange; and
a first processing unit configured to, if the eNB receives PDCP transmitter parameters, PDCP receiver parameters and a PDCP status report that are reported by the UE, forward the PDCP transmitter parameters, the PDCP receiver parameters and the PDCP status report to a serving eNB of paired UE in D2D communication of the UE.

32. The eNB according to claim 31, wherein the eNB further comprises:
a second processing unit configured to, if the eNB receives PDCP transmitter parameters, PDCP receiver parameters and a PDCP status report of the paired UE transmitted by the serving eNB of the paired UE, take the PDCP transmitter parameters of the paired UE as transmitter parameters of downlink between the eNB and the UE, take the PDCP receiver parameters of the paired UE as receiver parameters of uplink between the eNB and the UE, and transmit the PDCP status report of the paired UE to the UE; and
a second transmitting unit configured to transmit a second mode switch command to the UE.

33. UE, comprising:
a first transmitting unit configured to, if the UE receives a mode switch preparation command transmitted by an eNB, report PDCP transmitter parameters, PDCP receiver parameters and a PDCP status report to the eNB, so that the eNB forwards the PDCP transmitter parameters, the PDCP receiver parameters and the PDCP status report to a serving eNB of paired UE in D2D communication of the UE.

34. The UE according to claim 33, wherein the UE further comprises:
a second transmitting unit configured to, if the UE receives a PDCP status report of the paired UE in D2D communication, retransmit unsuccessfully received PDCP packets on the link after the communication mode switch is completed according to the PDCP status report of the paired UE.

35. An eNB, comprising:
a determining unit configured to determine a mode switch manner according to a predetermined policy;
a first transmitting unit configured to transmit a mode switch preparation command to UE in D2D communication if the mode switch manner determined by the determining unit is partial PDCP parameter exchange; and
a first processing unit configured to, if the eNB receives a first missing PDCP reception SN and a corresponding HFN reported by the UE, forward the first missing PDCP reception SN and the corresponding HFN of the UE to a serving eNB of paired UE in D2D communication of the UE.

36. The eNB according to claim 35, wherein the eNB further comprises:
a second processing unit configured to, if the eNB receives a first missing PDCP reception SN and a corresponding HFN of the paired UE transmitted by the serving eNB of the paired UE, reset PDCP transmitter parameters and PDCP receiver parameters of a link between the eNB and the UE according to the first missing PDCP reception SN and the corresponding HFN of the paired UE, and transmit the first missing PDCP reception SN and the corresponding HFN of the paired UE to the UE; and
a second transmitting unit configured to transmit a second mode switch command to the UE.

37. UE, comprising:
a first transmitting unit configured to, if the UE receives a mode switch preparation command transmitted by an eNB, report a first missing PDCP reception SN and a corresponding HFN to the eNB, so that the eNB forwards the first missing PDCP reception SN and the corresponding HFN to a serving eNB of paired UE in D2D communication of the UE.

38. The UE according to claim 37, wherein the UE further comprises:
a second transmitting unit configured to, if the UE receives a first missing PDCP reception SN and a corresponding HFN of the paired UE in D2D communication, retransmit all transmitted PDCP packets starting from the first missing PDCP reception SN of the paired UE on the link after the communication mode switch is completed.

39. An eNB, comprising:
a determining unit configured to determine a mode switch manner according to a predetermined policy;
a first transmitting unit configured to transmit a mode switch preparation command to UE in D2D communication if the mode switch manner determined by the determining unit is full PDCP parameter exchange or partial PDCP parameter exchange, so that the UE maintains its cellular connection;
a first data transmitting unit configured to transmit data to the UE on previous link before the communication mode switch is completed, until all core network packets related to the D2D communication are transmitted, or transmit data to the UE on the previous link before the communication mode switch is completed, until all the core network packets related to the D2D communication and packets forwarded by other eNBs are transmitted;
a second transmitting unit configured to transmit a second mode switch command to the UE, so that the UE transmits a next PDCP reception SN and a corresponding HFN to its paired UE; and
a third transmitting unit configured to transmit a PDCP status report or a first missing PDCP reception SN and a corresponding HFN to the UE, so that the UE retransmits a PDCP packet according to the PDCP status report or the first missing PDCP reception SN and the corresponding HFN.

40. The eNB according to claim 39, wherein the eNB further comprises:
a second data transmitting unit configured to, when the mode switch manner is full PDCP parameter exchange, forward successfully received PDCP packets to a serving eNB of the paired UE in D2D communication of the UE.

41. UE, comprising:
a receiving unit configured to, if the UE receives a mode switch preparation command transmitted by an eNB, maintain cellular connection, so as to receive data transmitted by the eNB; and
a transmitting unit configured to, if the UE receives a second mode switch command, transmit a next PDCP reception SN and a corresponding HFN to paired UE in D2D communication of the UE.

42. The UE according to claim 41, wherein the UE further comprises:
a processing unit configured to, if the UE receives a next PDCP reception SN and a corresponding HFN transmitted by the paired UE, set its PDCP transmitter parameters as the received next PDCP reception SN and the corresponding HFN.

43. The UE according to claim 42, wherein the UE further comprises:
a second transmitting unit configured to, if the UE receives a PDCP status report from a serving eNB, retransmit unsuccessfully received PDCP packets on the link after the communication mode switch is completed according to the PDCP status report from the serving eNB.

44. The UE according to claim 42, wherein the UE further comprises:
a third transmitting unit configured to, if the UE receives a first missing PDCP reception SN and a corresponding HFN from the serving eNB, retransmit all transmitted PDCP packets starting from the first missing PDCP reception SN on the link after the communication mode switch is completed.

45. A communication system, comprising the eNB as claimed in claim 23 and at least two UEs as claimed in claim 24; or comprising the eNB as claimed in claim 25 and at least two UEs as claimed in either one of claims 26-27; or comprising the eNB as claimed in claim 28 and at least two UEs as claimed in either one of claims 29-30; or comprising the eNB as claimed in either one of claims 31-32 and at least two UEs as claimed in either one of claims 33-34; or comprising the eNB as claimed in either one of claims 35-36 and at least two UEs as claimed in either one of claims 37-38; or comprising the eNB as claimed in either one of claims 39-40 and at least two UEs as claimed in any one of claims 41-44.

46. A computer-readable program, wherein when the program is executed in terminal equipment, the program enables a computer to carry out the method of communication mode switch as claimed in any one of claims 2, 4-5, 7-8, 11-12, 15-16 and 19-22 in the terminal equipment.

47. A storage medium in which a computer-readable program is stored, wherein the computer-readable program enables a computer to carry out the method of communication mode switch as claimed in any one of claims 2, 4-5, 7-8, 11-12, 15-16 and 19-22 in terminal equipment.

48. A computer-readable program, wherein when the program is executed in an eNB, the program enables a computer to carry out the method of communication mode switch as claimed in any one of claims 1, 3, 6, 9-10, 13-14 and 17-18 in the eNB.

49. A storage medium in which a computer-readable program is stored, wherein the computer-readable program enables a computer to carry out the method of communication mode switch as claimed in any one of claims 1, 3, 6, 9-10, 13-14 and 17-18 in an eNB.
